# EUROPEAN PATENT SPECIFICATION

(11) **EP 3 397 693 B1**
(45) Date of publication and mention of the grant of the patent: **09.10.2024**
(21) Application number: 16825635.2
(22) Date of filing: 20.12.2016
(51) Int. Cl.: C08L 95/00, C08L 23/00, C08L 33/06, C08L 63/00, C08K 5/52

(54) **MODIFIED ASPHALT USING EPOXIDE-CONTAINING POLYMERS**
MODIFIZIERTER ASPHALT MIT EPOXIDHALTIGEN POLYMEREN
ASPHALTE MODIFIÉ À L'AIDE DE POLYMÈRES CONTENANT DE L'ÉPOXYDE

(30) Priority: 29.12.2015 US 201562272276 P
(43) Date of publication of application: 07.11.2018
(73) Proprietor: Dow Global Technologies LLC, Midland, MI 48674 (US)
(72) Inventor: PREJEAN, George Wyatt, Orange Texas 77630 (US); DUBOIS, Charles J., Orange Texas 77632 (US)
(74) Representative: Boult Wade Tennant LLP
(86) International application number: PCT/US2016/067693
(87) International publication number: WO 2017/116831

(56) References cited:
- WO-A1-2004/111130
- WO-A1-2016/138374
- WO-A1-2017/015104
- WO-A1-2017/027225
- US-A- 6 011 095
- US-A- 6 117 926
- US-A1- 2013 197 134
- ANONYMOUS: "Elvaloy RET resins product data sheet, Dupont(TM) Elvaloy 4170", DUPONT PACKAGING & INDUSTRIAL POLYMERS, 3 October 2015 (2015-10-03), pages 1 - 2, XP055843645, Retrieved from the Internet <URL:https://www.cheminno.co.th/wp-content/uploads/2018/file/Dupont/ELVALOY/TDS-Elvaloy-4170.pdf> [retrieved on 20210922]
- INOCENTE DOMINGOS MATHEUS DAVID ET AL: "Rheological analysis of asphalt binders modified with Elvaloy TM terpolymer and polyphosphoric acid on the multiple stress creep and recovery test", MATERIALS AND STRUCTURES, LONDON, GB, vol. 48, no. 5, 20 December 2013 (2013-12-20), pages 1405 - 1416, XP035479781, ISSN: 1359-5997, [retrieved on 20131220], DOI: 10.1617/S11527-013-0242-Y
- INOCENTE DOMINGOS MATHEUS DAVID ET AL: "Erratum to: Rheological analysis of asphalt binders modified with Elvaloy TM terpolymer and polyphosphoric acid on the multiple stress creep and recovery test", MATERIALS AND STRUCTURES, LONDON, GB, vol. 48, no. 5, 15 May 2014 (2014-05-15), pages 1417, XP035480016, ISSN: 1359-5997, [retrieved on 20140515], DOI: 10.1617/S11527-014-0314-7
- NEHA KANABAR: "Comparison of ethylene terpolymer, styrene butadiene, and polyphosphoric acid type modifiers for asphalt cement (Thesis)", 1 December 2010 (2010-12-01), Kingston, Ontario, Canada, pages 1 - 133, XP055018232, Retrieved from the Internet <URL:http://qspace.library.queensu.ca/bitstream/1974/6236/1/Kanabar_Neha_A_201012_MSC.pdf> [retrieved on 20120202]

## Description

### CROSS-REFERENCE TO RELATED APPLICATION

The present application claims priority under 35 U.S.C. § 119 to U.S. Provisional Application No. 62/272,276, filed on December 29, 2015.

### FIELD OF THE INVENTION

In a polymer-modified asphalt composition, an asphalt is modified with one or more epoxide-containing ethylene copolymers. The polymer-modified asphalt composition is useful as a binder in asphalt compositions for road paving and roofing.

### BACKGROUND OF THE INVENTION

Several patents, patent applications and publications are cited in this description in order to more fully describe the state of the art to which this invention pertains.

Inocente Domingos Matheus David et al., "Rheological analysis of asphalt binders modified with Elvaloy TM terpolymer and polyphosphoric acid on the multiple stress creep and recovery test", Materials and Structures, London, GB, Vol 48, No. 5, doi:10.1617/S11527-013-0242-Y, ISSN 1359-5997, (20131220), pages 1405 to 1416 and Inocente Domingos Matheus David et al., "Erratum to: Rheological analysis of asphalt binders modified with Elvaloy TM terpolymer and polyphosphoric acid on the multiple stress creep and recovery test", Materials and Structures, London, GB, Vol 48, No. 5, doi:10.1617/S11527-014-0314-7, ISSN 1359-5997, (20140515) page 1417. This study presents the results of a series of creep-recovery experiments that were conducted on asphalt binders modified with polyphosphoric acid (AC+PPA) and Elvaloy^{®} terpolymer combined with polyphosphoric acid (AC+Elvaloy+PPA) at the temperatures of 52, 58, 64, 70 and 76°C.

Neha Kanabar, "Comparison of ethylene terpolymer, styrene butadiene and polyphosphoric acid type modifiers for asphalt cement (Thesis)", Kingston, Ontario, Canada, (20101201), pages 1 to 133. The study was to compare different modifiers in two asphalt cements.

US 2013/197134 A1 relates to use of organic chemical additives for the preparation of warm asphalt mixtures.

US 6,011,095 A relates to a method for preparing bitumen/polymer compositions and use thereof.

US 6,117,926 A relates to an acid-reacted polymer-modified asphalt composition.

WO 2004/111130 A1 relates to a thermoplastic polymer-linked-asphalt composition and a process for making a thermoplastic polymer-linked-asphalt.

WO 2016/138374 A1 relates to an asphalt composition comprising or produced from asphalt, a solution of ethylene copolymer dissolved in flux oil or liquid plasticizer, and optionally a sulfur source or acid, wherein the ethylene copolymer comprises repeat units derived from ethylene and from an epoxy-containing comonomer.

WO 2017/015104 A1 relates to polyepoxy-polymer-linked-asphalt having enhanced properties made by reacting a glycidyl-functionalized ethylene copolymer with reactive asphalt, wherein the glycidyl-functionalized ethylene copolymer has a glycidyl-containing comonomer content of 15.1 weight percent or greater.

WO 2017/027225 A1 relates to a modified asphalt composition comprising or is produced from asphalt and phosphorous acid.

The use of bitumen in the manufacture of materials for highway and industrial applications is known. Bitumen is the main hydrocarbon binder used in the field of road construction or civil engineering. To be used as a binder in these different applications, the bitumen must have certain mechanical properties, and in particular elastic or cohesive properties. The mechanical properties of the bitumen and of the binder compositions comprising the bitumen are determined by standardized tests, such as determination of the softening point, the penetrability and the rheological characteristics in defined traction. Asphalts, which comprise the binder compositions, are performance graded (PG) by a set of specifications developed by the U.S. government (Strategic Highway Research Program or SHRP). For example, PG58-34 asphalt provides good rut resistance at 58°C (determined by AASHTO (American Association of State Highway Transportation Officials)) and good cold cracking resistance at -34°C.

In general, unmodified bitumens do not possess all of the required qualities, and it is known that the addition of acid or various polymers to these conventional bitumens forms modified bitumen compositions having mechanical qualities that are improved, in comparison with those of the conventional bitumens.

Thus, asphalt sold for paving may be modified with polymers to improved resistance to ruts, fatigue, and cracking. Moreover, improved stripping resistance from aggregate results from increases in asphalt elasticity and stiffness. Addition of polymer to asphalt increases rut resistance and improves fatigue resistance at higher temperatures. Further, the polymer type influences the asphalt's low temperature performance; however, these properties are to a large extent dependent on composition-specific properties, such as flux oil content or penetration index.

The asphalt industry classifies polymers as elastomers or plastomers. The term "plastomer" as used herein refers to a polymer that lacks of elastomeric properties. Plastomers are sometimes used to modify asphalt because they can increase its stiffness and viscosity, which improves rut resistance. Plastomers are typically considered inferior to elastomers, however, because they do not produce significant improvements in the asphalt's fatigue resistance, creep resistance, cold crack resistance, etc. Generally, including an elastomeric polymer in an asphalt improves the asphalt's low temperature performance, and plastomeric polymers detract from it. Styrene/butadiene/styrene block copolymers (SBS) are elastomeric, as are ethylene/butyl acrylate/glycidyl methacrylate terpolymer (EnBAGMA) and ethylene/vinyl ester/glycidyl methacrylate terpolymer (EEGMA), both of which are available from E. I. du Pont de Nemours and Company, Wilmington, Delaware, USA (DuPont) under the trademark Elvaloy^{®} RET. Polyethylene (PE) and ethylene vinyl acetate (EVA) resins are plastomers. In fact, PE is not miscible with asphalt, so asphalt modified with PE must be continuously stirred to prevent separation. Thus, asphalt modified with PE must be prepared at the mix plant and cannot be shipped. PE therefore acts as a filler and does not meaningfully increase the softening point of asphalt.

Among the polymers commonly added to bitumens, random or block copolymers of an aromatic monovinyl hydrocarbon and a conjugated diene, and in particular of styrene and butadiene or of styrene and isoprene, are particularly effective. These polymers dissolve very easily in the bitumens and confer excellent mechanical and dynamic properties, in particular very good viscoelastic properties. U.S. Patent 6,087,420 describes a method for producing bitumen/polymer compositions that comprise at least one styrene-butadiene copolymer.

The use of other polymers as additives to asphalt (bitumen) is well-known in the art. See for example U.S. Patents 4,650,820 and 4,451,598, wherein terpolymers derived from ethylene, an alkyl acrylate and maleic anhydride are mixed with bitumen.

Also see for example U.S. Patents 5,306,750; 6,011,095; 6,117,926; and 6,743,838, and U.S. Patent Application Publication 2007/0027261, wherein reactant epoxy-functionalized, particularly glycidyl-containing, ethylene copolymers are mixed and reacted with bitumen and, as taught in U.S. Patents 6,011,095 and 6,117,926, with an acid catalyst or co-reactant to accelerate the rate of reaction and lower cost of the modified system. DuPont Elvaloy^{®} RET resins (ENBAGMA and EEGMA) are excellent modifiers for asphalt and improve asphalt performance at low concentrations (1 to 2 weight %).

U.S. Patent 5,331,028 describes blends of asphalt with a combination of glycidyl-containing ethylene copolymer and a styrene-conjugated diene block copolymer.

U.S. Patent 9,028,602 describes a bituminous composition comprising a bitumen in an amount ranging from 20 to 90 weight %, a carboxylic additive in an amount of from 0.25 to 5 weight %, and sulfur in an amount of 5 to 75 weight %, all percentages based on the weight of bitumen, carboxylic additive and sulfur, wherein the carboxylic additive is selected from carboxylic acids, carboxylic esters and carboxylic anhydrides.

U.S. Patent 7,608,142 discloses a slow setting bitumen-aggregate mix for cold paving comprising a cationic oil-in-water emulsion in the presence of an emulsifier containing a tertiary amine and an acid.

It is also known that the stability of the bitumen/polymer compositions can be improved by chemically coupling the polymer with the bitumen, this improvement moreover making it possible to extend the field of use of the bitumen-polymer compositions. The cross-linked bitumen/polymer compositions have good storage stability, cohesion, elongation capacity, and resistance to aging.

Accordingly, without wishing to be held to theory, it is hypothesized that the improvement in asphalt properties with addition of Elvaloy^{®} RET at such low concentrations is due to a chemical reaction between the Elvaloy^{®} RET and the functionalized polar fraction of asphalt, also referred to herein as "asphaltenes." EnBAGMA and EEGMA must be mixed with the asphalt at elevated temperatures to achieve the benefits of this reaction. Therefore, EnBAGMA and EEGMA are added to hot asphalt as pellets, which soften and melt due to the heat and the stirring. The reaction occurs with heat alone; however, acids such as polyphosphoric acid (PPA) are sometimes added to the asphalt and epoxide-containing polymer to reduce the reaction time. For example, the reaction may be completed and thorough mixing obtained in 6 to 24 hours without acid, compared to completion in 1 to 6 hours with acid. In addition, without acid the resultant polymer modified asphalt composition (PMA) may be less elastic, compared to a PMA produced with acid, as evidenced by a higher phase angle and low elastic recovery.

Disadvantageously, however, the addition of PPA to a glycidyl-containing ethylene copolymer-based PMA produced from a low-asphaltene asphalt results in gelling. Further, the amount of glycidyl-containing ethylene copolymers that can be included in such a PMA is limited, because higher amounts result in gelling. Moreover, the addition of further glycidyl-containing ethylene copolymer to an already-reacted PMA also results in gelling. Finally, the properties of some PMAs produced with glycidyl-containing ethylene copolymer and PPA degrade with aging at elevated temperatures.

It is apparent from the foregoing that it remains desirable to prepare polymer-modified asphalt compositions using polymer modifiers that are less susceptible to gelling, that provide improved performance, and that retain their good properties over longer periods of time.

### SUMMARY OF THE INVENTION

Accordingly, provided herein is a polymer-modified asphalt composition as defined in claim 1 appended hereto.

Finally, a road pavement or roofing material comprising the polymer-modified asphalt composition is provided.

In a second aspect there is provided a method for preparing the modified asphalt composition as defined in claim 14.

### DETAILED DESCRIPTION

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

Further, unless expressly stated to the contrary, the term "or" as used herein refers to an "inclusive or" and not to an "exclusive or." For example, a condition "A or B" is satisfied by any one of the following: A is true (or present) and B is false (or not present); A is false (or not present) and B is true (or present); and both A and B are true (or present). As used herein, the terms "a" and "an" include the concepts of "at least one" and "one or more than one". The word(s) following the verb "is" can be a definition of the subject.

The term "consisting essentially of" used in relation to compositions indicates that substantially (greater than 95 weight % or greater than 99 weight %) the only polymer(s) present in a composition is the polymer(s) recited. Thus, this term does not exclude the presence of impurities or additives, e.g. conventional additives. Moreover, such additives may possibly be added via a master batch that may include other polymers as carriers, so that minor amounts (less than 5 weight % or less than 1 weight %) of polymers other than those recited may be present. Any such minor amounts of these materials do not change the basic and novel characteristics of the composition.

As used herein, the term "about" means that amounts, sizes, formulations, parameters, and other quantities and characteristics are not and need not be exact, but may be approximate or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

Unless stated otherwise, all percentages, parts, ratios, etc., are by weight.

Further, when an amount, concentration, or other value or parameter is given as either a range, preferred range or a list of upper preferable values and lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range. It is not intended that the scope of the invention be limited to the specific values recited when defining a range. When a component is indicated as present in a range starting from 0, such component is an optional component (i.e., it may or may not be present). When present, an optional component may be present at a level of at least 0.1 weight % of the composition or copolymer, unless present at specified lower amounts. Finally, when the term "about" is used in describing a value or an end-point of a range, the disclosure should be understood to include the specific value or end-point referred to.

When materials, methods, or machinery are described herein with the term "known to those of skill in the art", "conventional" or a synonymous word or phrase, the term signifies that materials, methods, and machinery that are conventional at the time of filing the present application are encompassed by this description. Also encompassed are materials, methods, and machinery that are not presently conventional, but that may have become recognized in the art as suitable for a similar purpose.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 15 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such.

Polymers having more than two types of monomers, such as terpolymers, are also included within the term "copolymer" as used herein. A dipolymer consists essentially of two copolymerized comonomers and a terpolymer consists essentially of three copolymerized comonomers. The term "consisting essentially of" in reference to copolymerized comonomers allows for the presence of minor amounts (i.e. no more than 0.5 weight %) of non-recited copolymerized units, for example arising from impurities present in the commoner feedstock or from decomposition of comonomers during polymerization.

The term "(meth)acrylate" as used herein refers to methacrylate or acrylate. For example, the term "alkyl (meth)acrylate" refers to alkyl acrylate or alkyl methacrylate.

Moreover, the amounts of all components in a polymer or composition are complementary, that is, the sum of the amounts of all the components is the amount of the entire polymer or composition. For example, when an ethylene copolymer is described by specifying the weight percentage of a copolymerized comonomer, the total of the weight percentages of the copolymerized ethylene, the copolymerized comonomer, and the other copolymerized comonomers, if any, is 100 wt%.

The terms "melt flow index" (MFI) and "melt index" (MI) refer to the viscosity of a polymer, as determined by ASTM D 1238-65T, Condition E. Melt flow index, reported in units of weight per time, is an indicator of the ability of a polymer to flow under defined conditions of temperature and pressure.

The terms "asphalt" and "bitumen" are synonymous and used interchangeably herein to refer to the naturally-derived component of viscous compositions used for paving and roofing applications. "Bitumen" typically refers to the primarily hydrocarbon base material that is mixed with other components. "Asphalt" may refer to the base material and may also be used to refer to the final composition, including additives and aggregates, as described below. The term "polymer-modified asphalt" and its acronym PMA refer to a polymer-modified composition comprising bitumen or asphalt and to a polymer modified composition that comprises bitumen or asphalt and that is cross-linked.

Finally, the term "gel" and related terms, such as "gelling", as used herein, refer to unprocessible polymer, more specifically a gelatinous semisolid that renders the composition unsuitable for paving. Gelling may be the result of polymer/polymer cross-linking instead of a polymer/asphalt reaction.

Provided herein is a polymer-modified asphalt composition (PMA) that includes a high melt-flow epoxide-containing polymer. These polymers react with asphalt to form a PMA that may more specifically be referred to as a polyepoxy-polymer-linked-asphalt composition. The high melt-flow epoxide-containing polymers dissolve in asphalt more readily than expected, based on the solubility of the lower melt-flow epoxide-containing polymers and in light of typical relationships between a polymer's solubility and its molecular weight. Yet, the high melt-flow epoxide-containing polymers provide PMAs with improved properties comparable to those provided by epoxide-containing polymers with lower melt indices. PMAs containing high melt-flow (MI) epoxide-containing polymers can be mixed at lower temperatures, and the mixing will be completed over shorter times, than PMAs containing low-MI epoxide-containing polymers. The lower temperatures required to dissolve and react these high-MI modifiers offer advantages in energy savings and process economy. The high-MI polymers also provide the PMAs with lower viscosity for a given amount of epoxide-containing polymer. Thus, the amount of epoxide-containing polymer may be increased without detracting from the PMA's processibility. Moreover, PMA concentrates including high-MI epoxide-containing polymer may include higher amounts of polymer than is possible with low-MI epoxide-containing polymers. Finally, warm mix asphalts may be modified with high-MI epoxide-containing polymers instead of low molecular weight waxes, thus providing warm mix asphalts with improved properties.

### Asphalt or Bitumen

The PMA includes at least one bitumen or asphalt. The bitumen or asphalt base used in the invention comprises one bitumen, or two or more bitumens of different origins. Representative sources for asphalts and bitumens include native rock, lake asphalts, petroleum asphalts, airblown asphalts, cracked or residual asphalts. Bitumens and asphalts may be of natural origin, such as those contained in deposits of natural bitumen, natural asphalt or bituminous sands.

Asphalt is more commonly obtained as a residue in the distillation or refining of petroleum, such as from vacuum tower bottoms (VTB). All types of asphalts and bitumens, including natural and synthetic materials, are suitable for use in the polyepoxy-polymer-linked-asphalt composition described herein. Bitumens may be optionally blown, visbroken or deasphalted. The bitumens may be hard grade or soft grade materials. Different bitumens may be combined with each other to obtain an improved or optimal profile of end-use properties.

Chemically, asphalt is a complex mixture that can be separated into two major fractions of hydrocarbons, asphaltenes and maltenes. The asphaltenes are polycyclic aromatics and most contain polar functionality. One or more of the following functionalities are present: carboxylic acids, amines, sulfides, sulfoxides, sulfones, sulfonic acids, porphyrins, porphyrin derivatives, metalloporphyrins or metalloporphyrin derivatives comprising cations of vanadium, nickel or iron. The maltene phase contains polar aromatics, aromatics, and naphthene. It is generally believed that asphalt is a colloidal dispersion with the asphaltenes dispersed in the maltenes, and that the polar aromatics function as dispersing agents. The asphaltenes are relatively high in molecular weight (about 1500 daltons), compared with the other components of asphalt. The asphaltenes are amphoteric in nature and form aggregates through self-association that offer some viscoelastic behavior to asphalt. Asphaltenes vary in amount and functionality depending on the crude source from which the asphalt is derived. Specific examples of suitable crude asphalts include Ajax, Marathon, Wyoming Sour, Mayan, Venezuelan, Canadian, Arabian, Trinidad Lake, Salamanca and combinations of two or more thereof.

All asphalts containing asphaltenes are suitable for use in the polyepoxy-polymer-linked-asphalt composition described herein. The asphalt can be of low or high asphaltene content. Suitable asphaltene concentrations range from about 0.01 to about 30, about 0.1 to about 15, about 1 to about 10, or about 1 to about 5%, by weight based on the total weight of the asphalt. Suitable low asphaltene concentrations range from about 0.0001 to about 5 weight %, based on the total weight of the asphalt, such that the asphalt can react with the ethylene copolymer but may not react under heating or with acids such as SPA catalyst (see, e.g., U.S. Patent No. 6,117,926). This choice of co-reactant chemistry is believed to accelerate the reaction between the correct asphalt component and the epoxide-functionalized ethylene copolymer. Suitable high asphaltene asphalts contain more than 7 weight % asphaltenes or more than 10 weight % asphaltenes, based on the total weight of the asphalt. Generally, the asphalts useful in this invention will contain less than 5 weight % oxygen compounds and frequently less than 1 weight % oxygen compounds, again based on the total weight of the asphalt.

Suitable bitumens are advantageously chosen from road-surface bitumens of classes 10/20 to 160/220 and special bitumens of all classes.

Preferably, the bitumen base is present in the PMA at a level of between about 80 and 99.4% by weight, more preferably between 90 or 94% and 99% by weight, based on the total weight of the polymer/bitumen mixture.

Preferred asphalts have a viscosity at 135°C of 100 to 10,000 centipoise, preferably 200 to 3,000 centipoise, as measured using the method of AASHTO T316.

Suitable asphalts may also comprise one or more of a sulfonated asphalt, a salt of a sulfonated asphalt (e.g., sodium salt), and an oxidized asphalt. These functionalized asphalts may be present alone or in combination with one or more of the above-described asphalts that are as-isolated from nature.

### Epoxy-Functionalized Ethylene Copolymer

The polymer-modified asphalt composition further comprises at least one epoxy-functionalized ethylene copolymer. Suitable copolymers include an E/X/Y/Z epoxy-functionalized ethylene copolymer, wherein E represents copolymerized repeat units -(CH₂CH₂)- derived from ethylene; X represents copolymerized repeat units -(CH₂CR¹R²)-, wherein R¹ is a hydrogen atom or a methyl or ethyl group, and R² is a carboalkoxy, acyloxy, or alkoxy group of 1 to 10 carbon atoms; Y represents copolymerized repeat units -(CH₂CR³R⁴)-, wherein R³ is a hydrogen atom or a methyl group and R⁴ is a carboglycidoxy or glycidoxy group; and Z represents copolymerized repeat units derived from one or more additional comonomers.

More specifically, X is derived from copolymerized alkyl acrylates, alkyl methacrylates, vinyl esters, and alkyl vinyl ethers, for example, and the amount of X ranges from 10 to 25 weight %, based on the total weight of the epoxy-functionalized ethylene copolymer. Y is derived from glycidyl acrylate, glycidyl methacrylate, or glycidyl vinyl ether, for example, and the amount of Y ranges from 5 to 25 weight %, based on the total weight of the epoxy-functionalized ethylene copolymer. Finally, the optional additional comonomers Z include, without limitation, carbon monoxide, sulfur dioxide, acrylonitrile, and other monomers known to be capable of copolymerization with ethylene. The amount of Z ranges from 0 to 10 weight %, based on the total weight of the epoxy-functionalized ethylene copolymer. Complementarily, the remainder of the epoxy-functionalized ethylene copolymer consists of copolymerized repeat units -(CH₂CH₂)-derived from ethylene.

Preferably, the epoxy-functionalized ethylene copolymer is a glycidyl-containing polymer. Suitable glycidyl-containing ethylene copolymers and modified copolymers are well known in the polymer art and can readily be produced by the procedures described in U.S. Patent No. 4,070,532, for example.

The glycidyl moiety may be represented by the following formula:

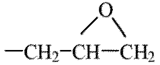

The glycidyl-containing ethylene copolymer comprises, consists essentially of, or consists of repeat units derived from ethylene (E); zero, one or both of the optional comonomers described herein (X and Z); and an epoxy comonomer (Y). Suitable epoxy comonomers include, without limitation, glycidyl esters of acrylic acid or methacrylic acid, glycidyl vinyl ether, and combinations thereof. The epoxy comonomer may be incorporated into the glycidyl-containing ethylene copolymer at a level of from about 1 or about 5 weight % to about 12, 15, 20, or 25 weight %, based on the total weight of the epoxy-functionalized ethylene copolymer. Preferred epoxy comonomers include glycidyl acrylate, glycidyl methacrylate, glycidyl butyl acrylate, glycidyl vinyl ether, for example, and combinations of two or more thereof.

Preferred epoxy-functionalized ethylene copolymers useful in this invention may be represented by the formula: E/X/Y, where E is the copolymer unit -(CH₂CH₂)- derived from ethylene; X is the copolymer unit -(CH₂CR¹R²)-, where R₁ is hydrogen, methyl, or ethyl, and R₂ is carboalkoxy, acyloxy, or alkoxy of 1 to 10 carbon atoms (X for example is derived from alkyl acrylates, alkyl methacrylates, vinyl esters, and alkyl vinyl ethers); and Y is the copolymer unit -(CH₂CR₃R₄)-, where R₃ is hydrogen or methyl and R₄ is carboglycidoxy or glycidoxy (Y for example is derived from glycidyl acrylate or glycidyl methacrylate). For purposes of this invention the epoxy-containing comonomer unit, Y, may also be derived from vinyl ethers of 1 to 10 carbon atoms (e.g., glycidyl vinyl ether) or mono-epoxy substituted di-olefins of 4 to 12 carbon atoms. The R₄ in the above formula includes an internal glycidyl moiety associated with a cycloalkyl monoxide structure; e.g., Y is derived from vinyl cyclohexane monoxide. Here, the amount of Z in the copolymer is 0 weight %.

In this preferred embodiment, useful weight percentages (based on total weight of E, X, and Y in the copolymer) of the E/X/Y epoxy-functionalized ethylene copolymer units preferably are about 10 to about 25 weight % of X, about 5 to 15 weight % of Y, and the remainder a complementary amount of E. Preferably, Y is selected from glycidyl acrylate or glycidyl methacrylate, more preferably glycidyl methacrylate.

Nevertheless, other suitable E/X/Y copolymers contain from 15.1 to about 25 weight % of comonomers Y containing glycidyl acrylate or glycidyl methacrylate, such as 16 to 25 weight %, or 16 to 20 weight %. Similar copolymers are described in greater detail in co-pending U.S. Patent Application Serial Number 62/195947 (Attorney Docket No. PP0328).

In preferred E/X/Y terpolymers, X is derived from an ester of unsaturated carboxylic acid such as (meth)acrylate or C₁ to C₈ alkyl (meth)acrylate, or combinations of two or more of these esters. More preferred alkyl (meth)acrylates include iso-butyl acrylate, n-butyl acrylate, iso-octyl acrylate, methyl acrylate and methyl methacrylate.

Notable E/X/Y terpolymers comprise copolymerized units of ethylene, n-butyl acrylate and glycidyl methacrylate (an ENBAGMA copolymer) or copolymerized units of ethylene, methyl acrylate and glycidyl methacrylate (an EMAGMA copolymer).

The epoxy-functionalized ethylene copolymer may optionally include repeat units X derived from a C₂ to C₈ carboxylic acid ester of an unsaturated alcohol such as vinyl alcohol. A particularly useful vinyl ester is vinyl acetate. A notable E/X/Y terpolymer comprises copolymerized units of ethylene, vinyl acetate and glycidyl methacrylate (an EVAGMA copolymer).

In addition, E/GMA is a preferred dipolymer comprising repeat units derived from copolymerization of ethylene and glycidyl methacrylate. Here, the amount of X and Z in the copolymer is 0 weight %.

Preferably, the epoxy-containing monomers Y are incorporated into the epoxy-functionalized ethylene copolymer by the concurrent reaction of monomers ("direct" or "random" copolymerization), rather than by grafting onto the reactant polymer ("graft" copolymerization).

Also preferably, the epoxy-containing ethylene copolymer has a melt flow index as determined by ASTM D1238-65T, Condition E (190°C/2.16kg), of about 100 or 150 to about 900 grams/10 minutes, preferably about 250 to about 900 grams/10 minutes, or about 250 to about 700 grams/10 minutes, or about 500 or 700 to about 900 grams/10 minutes, or about 50 to about 900 grams/10 minutes.

Finally, the polymer-modified asphalt composition comprises about 0.5 to about 20 weight %, preferably from about 0.5 to about 3 or about 5 or about 10 weight % of the epoxy-functionalized ethylene copolymer, based on the total weight of the polymer-modified asphalt composition.

### Anhydride Co-Reactants

The polymer-modified asphalt composition may optionally comprise at least one co-reactant, for example an acid or an anhydride. Anhydrides include both linear and cyclic anhydrides.

Linear anhydrides include those of the formula (RCO)2O wherein R comprises C8-C22 alkyl or alkenyl, such as stearic anhydride.

The cyclic anhydride notably comprises a five-or six-member cyclic anhydride structure. Five-member cyclic anhydrides are preferred. The cyclic anhydride may be monocyclic, the only cyclic structure being the cyclic anhydride moiety. Monocyclic anhydrides include glutaric anhydride, succinic anhydride, maleic anhydride, citraconic anhydride, itaconic anhydride and substituted succinic anhydrides such as methyl succinic anhydride, phenyl succinic anhydride, butyl succinic anhydride, 2 octen-1-yl succinic anhydride, dodecenyl succinic anhydride and hexadecyl succinic anhydride. Preferred monocyclic anhydrides include maleic anhydride and substituted succinic anhydrides such as dodecenyl succinic anhydride.

The cyclic anhydride may also be multicyclic, with at least one ring in addition to the cyclic anhydride moiety. The multicyclic anhydride may be aliphatic or aromatic. Aliphatic multicyclic anhydrides include tetrahydrophthalic anhydride, cyclohexane dicarboxylic anhydride and methyl nadic anhydride, preferably cyclohexane dicarboxylic anhydride. Aromatic anhydrides include phthalic anhydride, homophthalic anhydride, pyromellitic dianhydride, trimellitic anhydride, mellitic anhydride, 2,3-naphthoic anhydride and 1,8-naphthoic anhydride, preferably phthalic anhydride, pyromellitic dianhydride and trimellitic anhydride.

Finally, the polyepoxy-polymer-linked-asphalt composition comprises about 0.025 to about 1 weight %, preferably from about 0.1 to about 0.6 weight % of the anhydride, when present, based on the total weight of the polyepoxy-polymer-linked-asphalt composition.

### Acid Co-Reactants

The polymer-modified asphalt composition may optionally include at least one acid co-reactant. Inorganic acids and organic acids are suitable, for example mineral acids, phosphorous acid, phosphoric acids, sulfonic acids, carboxylic acids, and combinations of two or more of these acids. Examples of frequently used acids include polyphosphoric acid and superphosphoric acid. The polymer-modified asphalt composition can comprise from a lower limit of about 0.001, about 0.005, about 0.01, about 0.025, about 0.05, or about 0.1 weight % to an upper limit of about 1, about 2, or about 3 weight % of the acid(s), based on the total weight of the polymer-modified asphalt composition.

Notably, the polymer-modified asphalt composition may comprise phosphorous acid to provide an asphalt composition with improved properties. Phosphorous acid has the empirical formula H₃PO₃ and the structural formula HP(O)(OH)₂. This species exists in equilibrium with a minor amount of tautomer, P(OH)₃. IUPAC recommendations from 2005 are that the latter be called phosphorous acid, whereas the dihydroxy form is called phosphonic acid. As used herein, however, the term "phosphorous acid" refers to both tautomers and any mixture of the two tautomers, unless stated otherwise in limited circumstances. Phosphorous acid is a diprotic acid, since the hydrogen bonded directly to the central phosphorus atom is not readily ionizable. The pKa for the first deprotonation is 1.3, and the pKa for the second deprotonation is 6.7. Phosphorous acid is a white crystalline material that melts at 64°C to 74°C. This makes phosphorous acid significantly easier to handle, transport and mix with asphalt compared to polyphosphoric acid (PPA), which is a liquid at room temperature.

Both phosphorous acid and its deprotonated forms are good reducing agents, although not necessarily quick to react. This reducing behavior may decrease deterioration or "aging" of asphalt, which is evident in failure modes such as brittleness, rutting, fatigue or cold temperature cracking. Without wishing to be held to theory, it is hypothesized that asphalt modified with nonreducing acids such as PPA will be more susceptible to deterioration that is caused in part by oxygen penetration and oxidation of the asphalt components.

When present, the phosphorous acid is included in the asphalt composition at a level of about 0.025 to about 2 weight%, based on the total weight of the polymer-modified asphalt composition, such as from about 0.1 or about 0.5 weight %, to about 1.0 weight % or about 1.5 weight %.

See co-pending U.S. Patent Application Serial Numbers 62/202,210 and 62/251,946 (Attorney Docket Nos. PP0352 USPSP and PP0352 USPSP2) for further discussion of the use of acid co-reactants in PMAs.

### Non-Reactive Polymers

Non-reactive polymers are polymeric compositions that are known in the art for inclusion in polymer-modified asphalt and that do not react with the asphalt. They may be used together with phosphorous acid to modify asphalt in the absence of a reactive polymer such as the epoxy-containing polymers described above. Optionally, non-reactive or "diluent" polymers may be further included in the polyepoxy-polymer-linked-asphalt composition described above, in combination with phosphorous acid. Preferably, these non-reactive polymers are also non-reactive towards the epoxy-functionalized ethylene copolymers and the functionalized polyolefins.

Suitable non-reactive polymers include, without limitation, ethylene alkyl acrylate, ethylene alkyl methacrylate or ethylene vinyl acetate copolymers, styrene/conjugated-diene block copolymers including styrene polybutadiene or isoprene, ethylene butene block copolymers (e.g., SBS, SIS, and SEBS block copolymers), polyolefins produced by any process known in the art with any known transition metal catalyst or single-site catalyst, or combinations thereof. More specifically, the non-reactive polymers include olefinic polymers such as polyethylene, polypropylene, polybutene, polyisobutene, ethylene/propylene copolymers, ethylene/propylene/diene terpolymers, or polymers such as polybutadiene, polyisoprene or polynorbornene.

These non-reactive polymers can be combined with phosphorous acid to modify asphalt in amounts that range from a lower limit of 0.1 or 1 to an upper limit of 5, 10, 15 or 18 weight %, based on the total weight of the polymer-linked-asphalt composition.

Moreover, the non-reactive polymers can be combined into the reactive asphalt, reactive epoxy-functionalized ethylene copolymers and reactive functionalized polymers in amounts that range from 0 to 18 weight %, or 0 to 15 weight %, or 0 to 10 weight %, or 0 to 5 weight %, based on the total weight of the polymer-modified asphalt composition. When present, the non-reactive polymer may be included from a lower limit of 0.1 or 1 to an upper limit of 5, 10, 15, or 18 weight %, based on the total weight of the PMA composition.

### Styrene/Conjugated-Diene Block Copolymer

Preferred nonreactive polymers include styrene/conjugated-diene block copolymers. The styrene/conjugated-diene block copolymers useful in this invention are well-known polymers derived from, or comprising, styrene and a conjugated-diene, such as butadiene, isoprene, ethylene butene, 1,3-pentadiene and the like. For simplicity, the term "styrene-butadiene-styrene" block copolymer, or "SBS" copolymer, unless specified more narrowly, will be used herein to refer to any such polymers of styrene and a conjugated diene.

The styrene/conjugated-diene block copolymers may be di-, tri- or poly-block copolymers having a linear or radial (star or branched) structure, with or without a random junction. Suitable block copolymers include, for example, diblock A-B type copolymers; linear (triblock) A-B-A type copolymers; and radial (A-B)ₙ type copolymers; wherein A refers to a copolymer unit derived from styrene and B refers to a copolymer unit derived from a conjugated-diene. Preferred block copolymers have a linear (triblock) A-B-A type structure or a radial (A-B)ₙ type structure.

Generally, the styrene/conjugated-diene block copolymer will contain about 10 to about 50 weight % of copolymer units derived from styrene and about 50 to about 90 weight % of copolymer units derived from a conjugated diene, preferably butadiene or isoprene, more preferably butadiene. More preferably, 20 to 40 weight % of the copolymer units will be derived from styrene, the remainder being derived from the conjugated-diene.

Preferably, the styrene/conjugated-diene block copolymers have a weight-average molecular weight from a lower limit of about 10,000, 30,000, 100,000, 150,000 or 200,000 daltons to a higher limit of about 500,000, 600,000, 750, 000 or 1,000,000 daltons. The weight-average molecular weight of the styrene/conjugated-diene block copolymer can be determined using conventional gel permeation chromatography.

The melt flow index of the styrene/conjugated-diene block copolymer will typically be in the range from about 0 to about 200 g/10 min, preferably about 0 to 100 g/10 min, more preferably about 0 to 10 g/10 min, as determined by ASTM Test Method D 1238, Condition G.

Notable SBS copolymers have an overall content of 50 to 95 % by weight of butadiene and the content of units containing a 1,2 double bond resulting from butadiene of 12 to 50 weight % of the copolymer. The weight-average molecular mass of the copolymer of styrene and of butadiene can be between 10,000 and 600,000 daltons, preferably between 30,000 and 400,000 daltons.

The copolymers of styrene and conjugated-diene can be prepared by anionic polymerization of the monomers in the presence of initiators composed of organometallic compounds of alkali metals, in particular organolithium compounds, such as alkyllithium and preferably butyllithium, the preparation being carried out at temperatures of less than or equal to 0°C and in solution in a solvent that is at least partly composed of a polar solvent, such as tetrahydrofuran or diethyl ether. Preparation procedures include those described in U.S. Patents 3,281,383 and 3,639,521.

Suitable styrene/conjugated-diene block copolymers are commercially available, for example, under the tradenames KRATON^{™}, EUROPRENE SOL^{™} and SOLPRENE^{™} from Shell Chemical Company, Enichem and Phillips Petroleum Company, respectively.

Specific SBS copolymers include a block copolymer with a weight-average molecular mass of 120,000 daltons and containing, by weight, 25% of copolymerized styrene and 75% of copolymerized butadiene, including an amount of units containing a 1,2 double bond representing 9% of the copolymer;
a diblock copolymer of styrene and of butadiene with a random junction having a weight-average molecular mass of 280,000 daltons and containing, by weight, 15% of copolymerized styrene, including 10% in the block form, and 85% of copolymerized butadiene, including 8% in the form of units containing a 1,2 double bond;
a diblock copolymer of styrene and of butadiene having a weight-average molecular mass of 120,000 daltons and containing, by weight, 25% of copolymerized styrene and 75% of copolymerized butadiene, including an amount in the form of units containing a 1,2 double bond representing 30% of the copolymer; and
a diblock copolymer of styrene and of butadiene with a random junction having a weight-average molecular mass of 150,000 daltons and containing, by weight, 25% of copolymerized styrene, including 17% in block form, and 75% of copolymerized butadiene, including an amount in the form of units containing a 1,2 double bond representing 35% of the copolymer.

The styrene polybutadiene or isoprene, ethylene butene block copolymers (e.g., SBS, SIS, SEBS block copolymers) can be combined with phosphorous acid to modify asphalt in an amount ranging from a lower limit of 0.1 or 1 to an upper limit of 5, 10, 15 or 18 weight %, based on the total weight of the polymer-linked-asphalt composition.

Notable polymer-modified asphalt compositions comprise an epoxy-containing polymer and 0 weight % of styrene polybutadiene or isoprene, ethylene butene block copolymers (e.g., SBS, SIS, SEBS block copolymers). Alternatively, the epoxy-containing polymer, styrene polybutadiene or isoprene, ethylene butene block copolymer (e.g., SBS, SIS, SEBS block copolymer), and phosphorous acid can be incorporated into asphalt to provide a PMA. When present in the PMA, the amount of the styrene block copolymers ranges from a lower limit of 0.1 or 1 to an upper limit of 5, 10, 15, or 18 weight %, based on the total weight of the polymer-modified asphalt composition.

### Non-Polymeric Additives

The polyepoxy-modified asphalt composition may optionally comprise one or more of a flux oil, a liquid plasticizer, a sulfur source and a hydrogen sulfide scavenger.

Flux oils encompass many types of oils used to modify asphalt and are the final products in crude oil distillation. They are non-volatile oils that are blended with asphalt to soften it. For example, flux oils may be petroleum-based products. They can be aromatic, such as ValAro from Paulsboro Refining Company, Paulsboro NJ; paraffinic, such as Hydrolene^{™} from HollyFrontier Refining & Marketting LLC, Plymouth Meeting PA; or mineral such as Hydrobryite^{™} from Sonneborn, LLC, Parsippany, NJ. Flux oils can also be a shortening or any renewably-produced vegetable or bio-oil. Blends of two or more such oils are also contemplated.

A liquid plasticizer is an additive that increases the plasticity or fluidity of a material. The major applications are for plastics, such as phthalate esters for improving the flexibility and durability of polymer compositions. Examples of suitable liquid plasticizers include, without limitation, carboxylate esters, for example any dicarboxylic or tricarboxylic ester-based plasticizers, such as bis(2-ethylhexyl) phthalate (DEHP), di-octyl phthalate (DOP), diisononyl phthalate (DINP), and diisodecyl phthalate (DIDP). Suitable liquid plasticizers also include acetic acid esters of monoglycerides made from castor oil; and other nonphthalate plasticizers for PVC including trimellitates, such as tris(2-ethylhexyl) trimellitate, adipates such as bis(2-ethylhexyl) adipate, benzoates such as 1,5-pentanediol dibenzoate, adipic acid polyesters, polyetheresters, and epoxy esters or maleates.

Suitable levels of these materials and methods of incorporating them into the asphalt composition are described in detail in Intl. Patent Appln. Publn. No. WO2016/138374 (Attorney Docket No. PP0325). Briefly, however, the ratio of ethylene copolymer to flux oil or a liquid plasticizer ranges from 20:80 to 95:5, by weight based on the total weight of the ethylene copolymer and the flux oil or liquid plasticizer. In addition, when the flux oil or liquid plasticizer is present, its level is preferably about 0.01 to about 10 weight %, based on the total weight of the based on the total weight of the asphalt composition.

A hydrogen sulfide scavenger is an agent capable of neutralizing hydrogen sulfide (H₂S). It is a compound or a mixture of compounds which in the presence of H₂S combines with the latter so as to collect or scavenge it, thus reducing or eliminating the emission or the release of H₂S at PMA storage, transfer and transport temperatures. For the sake of simplicity, the word "scavenger" is used in the remainder of the description to refer to the agent capable of reducing H₂S emissions. The use of an H₂S scavenger makes it possible to significantly reduce, or advantageously to eliminate, the release of H₂S during the preparation, loading or unloading of a bitumen/polymer composition. Hydrogen sulfide scavengers include those described in PCT patent application publication WO2005065177, and U.S. Patent Application Publication 2014/0357774.

The amount of H₂S scavenger depends on the amount of sulfur source(s) present in the asphalt. For example, the H₂S scavenger may be added to the asphalt composition in an amount from a lower limit of about 0.001, about 0.005, about 0.01, about 0.05, or about 0.1 weight % to an upper limit of about 2, about 3, about 5 or about 10 weight %, based on the total weight of the PMA. The effective amount may be determined by preparing a sample of a desired asphalt composition and adding sufficient H₂S scavenger to reduce H₂S emissions below a predetermined limit, such as less than 1 ppm of asphalt.

The asphalt composition may also include one or more sulfur sources to generate sulfur in the polymer/asphalt blend or in the PMA. Suitable sulfur sources include, without limitation, elemental sulfur, a sulfur donor, or a sulfur byproduct, which are useful as crosslinking agents.

The sulfur cross-linking agent is preferably elemental sulfur, a hydrocarbyl polysulfide, a sulfur-donor vulcanization accelerator, another sulfur source, or a combination of two or more of these sulfur cross-linking agents. The elemental sulfur is preferably flowers of sulfur and, more preferably, crystallized sulfur in orthorhombic form, also known as alpha sulfur. Suitable sulfur-donor vulcanization accelerators include, without limitation, mercaptobenzothiazole (MBT), the thiurams, thiuram polysulfides, alkylphenol disulfides, disulfides, dithiocarbamates and their derivatives. Other suitable sulfur sources include, without limitation sodium diethyldithiocarbamate, 2,2-dithiobis(benzothiazole), mercaptobenzothiazole, dipentamethylenethiuram tetrasulfide, and Sasobit^{®} TXS (a proprietary product available from Sasol Wax Americas, Shelton, CN, USA). Suitable hydrocarbyl polysulfides, sulfur-donor vulcanization accelerators, and other sulfur sources are described in French Patent Application FR-A-2528439 and in the references cited therein.

The cross-linking of the bitumen/polymer mixture is carried out under stirring, by heating at a temperature between 160 and 195°C, for at least 15 minutes. The amount of sulfur-containing cross-linking agent is preferably from 0.05% to 5% by weight, more preferably from 0.05 and 0.5% by weight, based on the total weight of the PMA and complementarily with the other components of the PMA. Alternatively, the sulfur source(s) may be added to the asphalt in a step that is separate from the step(s) of adding the ethylene copolymer and the acid or anhydride, if present. For example, the ethylene copolymer, sulfur source and H₂S scavenger can be added to asphalt, mixed for a brief period of time, and then the acid can be added with further mixing to produce the PMA.

### Methods

Further provided herein is a method of preparing a polymer-modified asphalt composition. This method comprises the steps of:
(1) providing an epoxy-functionalized ethylene copolymer (dipolymer or terpolymer) comprising copolymerized units of ethylene and copolymerized units of an epoxy-containing comonomer as described above, or providing a combination of the epoxy-functionalized ethylene copolymer and a nonreactive polymer as described above;
(2) heating and mixing the epoxy-functionalized ethylene copolymer, or the combination of polymers, with at least one asphalt to provide a polymer-asphalt blend; and optionally
(3) adding acid or an anhydride and mixing it or them with the polymer-asphalt blend.

Examples of suitable processes for blending epoxy-functionalized polymers with asphalt include those in which the epoxy-functionalized ethylene copolymer comprises an ethylene vinyl acetate glycidyl methacrylate terpolymer, an ethylene n-butyl acrylate glycidyl methacrylate terpolymer or an ethylene methyl acrylate glycidyl methacrylate terpolymer.

Further examples of suitable processes include those in which step (2) comprises
a) heating the base bitumen or asphalt to 120 to 200 °C either prior to or after addition to a reactor for modifying with the copolymer;
b) adding epoxy-functionalized ethylene copolymer, the nonreactive polymer, or the combination of polymers to the heated asphalt in the reactor with stirring for about 10 or 15 minutes to about 1 to 4 hours while maintaining the temperature at 120 to 200 °C.

Examples of suitable processes also include those in which step (3) comprises adding the acid or anhydride to the heated asphalt in the reactor with stirring for about 10 or 15 minutes to about 1 to 4 hours, while maintaining the temperature of the asphalt at 150 to 250 °C.

PMAs have been typically produced in a high-shear mill process, or a low-shear mixing process, as is well known to one skilled in the art. For example, the process is dependent on the equipment available, and on the polymers used. In general, polymers that can be used in low-shear mixing equipment can also be used in high-shear equipment. A molten mixture of asphalt and polymer modifiers can be heated at about 120 to about 200°C, or about 140 to 200°C. The molten mixture can be mixed by a mechanical agitator, for example, or by any other suitable mixing means.

Publications IS-200, from the Asphalt Institute of Lexington, KY, are among the references that describe suitable methods for the commercial production of PMAs.

The base asphalt can be preheated to 150 to 180°C or higher in a blending vessel to make it flowable. The ethylene copolymer and phosphorous acid can be added to asphalt with stirring at temperatures from 120 to 200°C, such as about 165 to 190°C. It is desirable to heat the materials to as low a temperature as necessary while still obtaining good processing rates.

The use of phosphorous acid allows for greater flexibility of preparation of the polymer-modified asphalt composition, compared to PMAs prepared with polyphosphoric acid. In some embodiments, the ethylene copolymer and the phosphorous acid are added to the heated asphalt in separate sequential steps, allowing for mixing the ethylene copolymer with the asphalt prior to adding the phosphorous acid. For example, the copolymer can be mixed with heated asphalt for a period of time such as 10 minutes to one hour, or more, followed by the addition of the phosphorous acid with further mixing for a period of time such as 10 minutes to one hour, or more.

Alternatively, at least some of the ethylene copolymer can be added to the asphalt after addition of the phosphoric acid, if necessary to adjust the properties of the PMA. It also may be possible to add the ethylene copolymer and the phosphorous acid at nearly the same time, with a very short mixing period to melt the ethylene copolymer pellets. These options may not be feasible when the polymer/asphalt blends include polyphosphoric acid.

The phosphorous acid facilitates blending of the polymer modifier with the asphalt, providing faster mixing times compared to addition of the polymer to the asphalt without the phosphorous acid. For example, improvements in properties such as pass/fail temperature, phase angle and elastic recovery of the polymer modified asphalt composition may be obtained in an hour or less, for example 10 or 15 minutes after addition of the phosphorous acid. This may be significantly faster than the time to reach complete blending in PMAs containing the polymer alone and may even be faster than the blending time of PMAs that include both polymer and polyphosphoric acid.

In other suitable methods, an epoxy-containing ethylene copolymer (ECP) or a nonreactive polymer such as a SBS polymer can be combined with, or added to, flux oil or a plasticizer as described above by any means known to one skilled in the art to produce a solution or substantially a solution. The polymer modifier(s) and other optional components can be dissolved in the flux oil or liquid plasticizer by mixing with the oil or plasticizer prior to mixing them with the asphalt. To facilitate the formation of a solution, the combination or addition can be mixed by, for example, mechanical means such as stirring. For example, the formation of an ECP solution in oil or plasticizer can be carried out under atmospheric conditions, stirring for 10 to 30 minutes at 120 to 150 °C and 700 to 800 RPM. The resulting blend, a solution of polymer modifier in oil or plasticizer, has the consistency of free-flowing oil at elevated temperatures. Examples of these processes are described in detail in co-pending U.S. Provisional Patent Application No. 62/121,078 (Intl. Patent Appln. No. PCT/US2016/019764; Attorney Docket No. PP0325).

The epoxy-containing ethylene copolymer solution can comprise about 1 to about 99, or about 10 to about 80, or about 20 to about 70, or about 25 to about 60 wt% of an epoxy-containing ethylene copolymer and complementarily about 99 to about 1, or about 90 to about 20, or about 80 to about 30, or about 75 to about 40 wt% of the flux oil(s) or liquid plasticizer(s), based on the total weight of the solution.

After its preparation, the epoxy-functionalized ethylene copolymer solution can be mixed with asphalt. Dispersion of the ethylene copolymer solution into the asphalt may take 10 to 60 minutes, followed by addition of the phosphorous acid with stirring for an additional period of time such as 10 to 60 minutes. As discussed above, use of phosphorous acid may provide alternative embodiments in which the epoxy-functionalized ethylene copolymer solution is added to the heated asphalt in two or more aliquots before and after addition of the phosphorous acid. Alternatively, the epoxy-functionalized ethylene copolymer solution is added to the asphalt simultaneously with the phosphorous acid.

### End Uses

The polymer-modified asphalt compositions described herein are useful for elastomeric modification of asphalt compositions. Accordingly, the PMAs are suitable for use in asphalt compositions for road pavement or for roofing materials, such as shingles, sheets, or roll products, and in any other application in which an elastomerically modified asphalt composition is useful.

A suitable road-paving material includes about 1 to about 10 or about 5 wt% of the PMA and complementarily about 90 to about 99 or about 95 wt% of aggregates. Polymer-modified asphalt compositions are useful in materials for paving highways, city streets, parking lots, ports, airfields, sidewalks, and the like. Polymer-modified asphalts can also be used as a chip seal, an emulsion, or another repair product for paved surfaces.

The PMAs described herein are also suitable for use as roofing or waterproofing products. For example, the PMAs are suitable for use to adhere various roofing sheets to roofs and for use as waterproofing coatings for many roofing fabrics. Preferably, the PMAs used as roofing or waterproofing products include a relatively high amount of the epoxy-functionalized ethylene copolymer, for example about 3 or 5 wt%, based on the total weight of the PMA,

### Preferred embodiments

1. A polyepoxy-polymer-linked-asphalt composition (particularly for use in paving and roofing applications) comprising
   (a) asphalt in 79 or 89 to 99.4 weight %, based on the total of component (a), component (b) and component (c);
   (b) 0.5 to 10 or 20 weight %, based on the total of component (a), component (b) and component (c), of an E/X/Y/Z epoxy-functionalized ethylene copolymer, wherein E is the copolymer unit -(CH₂CH₂)- derived from ethylene; X is the copolymer unit -(CH₂CR¹R²)-, where R¹ is hydrogen, methyl, or ethyl, and R² is carboalkoxy, acyloxy, or alkoxy of 1 to 10 carbon atoms (X for example is derived from alkyl acrylates, alkyl methacrylates, vinyl esters, or alkyl vinyl ethers), present in from 0 to 25 or 40 weight % of the copolymer; Y is the copolymer unit -(CH₂CR³R⁴)-, where R³ is hydrogen or methyl and R⁴ is carboglycidoxy or glycidoxy (Y for example is derived from glycidyl acrylate, glycidyl methacrylate, or glycidyl vinyl ether) present in from 1 to 25 weight % of the copolymer, and Z is the copolymer unit derived from comonomers including carbon monoxide, sulfur dioxide, acrylonitrile, or other monomers, present in from 0 to about 10 weight % of the copolymer, wherein the copolymer has a melt flow index measured at 190 °C with a 2160 g load from 100 or 150 to 900 g/10 min; and optionally (c) 0.025 or 0.1 to 1 weight% of a co-reactant, wherein the co-reactant comprises one or more materials selected from the group consisting of polyphosphoric acid, phosphorous acid, and trimellitic anhydride, based on the total of component (a), component (b) and component (c).
2. The composition of embodiment 1 wherein X comprises an alkyl acrylate, alkyl methacrylate, vinyl ester, or alkyl vinyl ether.
3. The composition of any of the preceding embodiments wherein X comprises butyl acrylate.
4. The composition of any of the preceding embodiments wherein the ethylene copolymer comprises from 10 to 25 weight % of X.
5. The composition of any of the preceding embodiments wherein the epoxy-containing comonomer Y comprises glycidyl acrylate, glycidyl methacrylate, glycidyl butyl acrylate, glycidyl vinyl ether, or combinations of two or more thereof.
6. The composition of any of the preceding embodiments wherein Y comprises glycidyl acrylate or glycidyl methacrylate.
7. The composition of any of the preceding embodiments wherein the ethylene copolymer is an ethylene glycidyl methacrylate dipolymer, an ethylene vinyl acetate glycidyl methacrylate terpolymer, an ethylene n-butyl acrylate glycidyl methacrylate or ethylene methyl acrylate glycidyl methacrylate terpolymer.
8. The composition of any of the preceding embodiments wherein Y comprises a glycidyl moiety and is present in the copolymer from a lower limit of 1 to an upper limit of 15 weight %.
9. The composition of any of the preceding embodiments wherein Y comprises a glycidyl moiety and is present in the copolymer from a lower limit of 15.1 to an upper limit of 25 weight %.
10. The composition of any of the preceding embodiments wherein Y is present in the copolymer from a lower limit of 16 to an upper limit of 25 weight %.
11. The composition of any of the preceding embodiments wherein the copolymer has a melt flow index from 250 to 900 grams/10 minutes.
12. The composition of any of the preceding embodiments wherein the copolymer has a melt flow index from 500 or 700 to 900 grams/10 minutes.
13. The composition of any of the preceding embodiments wherein the co-reactant comprises polyphosphoric acid or phosphorous acid or trimellitic anhydride.
14. The composition of any of the preceding embodiments wherein the acid comprises phosphorous acid.
15. The composition of any of the preceding embodiments further comprising a nonreactive polymer comprising an ethylene acrylate, ethylene methacrylate or ethylene vinyl acetate copolymer; or styrene/conjugated-diene block copolymer; or polyolefin; or combinations thereof.
16. The composition of any of the preceding embodiments wherein the styrene/conjugated-diene block copolymer comprises butadiene, isoprene, ethylene butene, or 1,3-pentadiene and more preferably butadiene;
17. The composition of any of the preceding embodiments wherein the styrene/conjugated-diene block copolymer comprises a di-, tri- or poly-block copolymer having a linear or radial structure, with or without a random junction, preferably wherein the styrene/conjugated-diene block copolymer comprises a diblock A-B type copolymer; linear (triblock) A-B-A type copolymer; or radial (A-B)ₙ type copolymers; wherein A refers to a copolymer unit derived from styrene and B refers to a copolymer unit derived from a conjugated-diene.
18. The composition of any of the preceding embodiments wherein the styrene/conjugated-diene block copolymer comprises 10 to 50 weight percent copolymer units derived from styrene and 50 to 90 weight percent copolymer units derived from a conjugated-diene.
19. The composition of any of the preceding embodiments wherein the polyolefin comprises polyethylene, polypropylene, polybutene, polyisobutene, ethylene/propylene copolymer, ethylene/propylene/diene terpolymer, polybutadiene, polyisoprene or polynorbornene.
20. The composition of any of the preceding embodiments wherein the modified asphalt further comprises flux oil, liquid plasticizer, amine scavenger, hydrogen sulfide scavenger, or combinations thereof, preferably wherein the flux oil comprises an aromatic oil, paraffinic oil, mineral oil, vegetable oil, shortening or blends thereof; and the liquid plasticizer comprises a dicarboxylic or tricarboxylic ester-based plasticizer, acetic acid ester of a monoglyceride, trimellitate, adipate, benzoate, adipic acid polyester, polyetherester, epoxy ester, maleate.
21. A method for preparing a polymer modified asphalt composition according to any of the preceding embodiments, the method comprising:
   (1) providing an E/X/Y/Z epoxy-functionalized ethylene copolymer, or a combination of the epoxy-functionalized ethylene copolymer and a nonreactive polymer;
   (2) heating and mixing the epoxy-functionalized ethylene copolymer or the combination of the epoxy-functionalized ethylene copolymer and the nonreactive polymer with asphalt to provide a polymer asphalt blend; and optionally
   (3) adding a co-reactant, and mixing it with the polymer asphalt blend, wherein the co-reactant comprises one or more materials selected from the group consisting of polyphosphoric acid, phosphorous acid, and trimellitic anhydride.
22. The method of embodiment 21 wherein step (2) comprises
   a) heating the asphalt to 120 to 200° C either prior to or after addition to a reactor for modifying with the polymer;
   b) adding the epoxy-functionalized ethylene copolymer or the combination of the epoxy-functionalized ethylene copolymer and the nonreactive polymer to the heated asphalt in the reactor with stirring for 10 minutes to 30 minutes while maintaining the temperature at 120 to 200 °C; and
   step (3) comprises adding acid to the heated polymer asphalt blend in the reactor with stirring for 10 minutes to 4 hours while maintaining the temperature at 120 to 200° C.
23. The method of embodiment 21 or 22 wherein the nonreactive polymer comprises an ethylene acrylate, ethylene methacrylate or ethylene vinyl acetate copolymer; or styrene/conjugated-diene block copolymer comprising butadiene, isoprene, ethylene butene, or 1,3-pentadiene and more preferably butadiene; or polyolefin; or combinations thereof.
24. The method of embodiment 23 wherein the nonreactive polymer comprises a di-, tri- or poly -block styrene/conjugated-diene block copolymer comprising butadiene having a linear or radial structure, with or without a random junction.
25. The method of any of the preceding embodiments 21, 22, 23 or 24 wherein the acid comprises polyphosphoric acid or phosphorous acid.
26. The method of any of the preceding embodiments 21, 22, 23, 24 or 25 wherein the acid comprises phosphorous acid.
27. The method of any of the preceding embodiments 21, 22, 23, 24, 25 or 26 wherein the epoxy-functionalized ethylene copolymer, or the nonreactive polymer, or combination of polymers is dissolved in flux oil or liquid plasticizer prior to mixing with the asphalt.
28. A road pavement material or a roofing material comprising a composition according to any of the preceding embodiments 1 to 20.
29. A road pavement material or a roofing material comprising a composition produced according to any of the preceding embodiments 21 to 27.

The following examples are provided to describe the invention in further detail. These examples, which set forth specific embodiments and a preferred mode presently contemplated for carrying out the invention, are intended to illustrate and not to limit the invention.

### EXAMPLES

### Materials

Summarized in Table 1 are ethylene copolymers containing glycidyl methacrylate (GMA) and optionally n-butyl acrylate (nBA) or vinyl acetate (VA) comonomers that are useful for blending with bitumens to provide polymer-modified asphalt compositions.

**Table 1**

| | Weight % in copolymer | | | |
|---|---|---|---|---|
| | GMA | nBA | VA | MI |
| EnBAGMA-1 | 5.25 | 28 | 0 | 12 |
| EnBAGMA-2 | 12.6 | 21.2 | 0 | 7.4 |
| EnBAGMA-3 | 8.8 | 21.8 | 0 | 94 |
| EnBAGMA-4 | 8.3 | 21.3 | 0 | 175 |
| EnBAGMA-5 | 8.3 | 21.1 | 0 | 250 |
| EVAGMA-1 | 5.25 | 0 | 21.5 | 12 |
| EVAGMA-2 | 9-10 | 0 | 15 | 8 |
| EVAGMA-3 | 15.7 | 0 | 14.9 | 780 |
| EVAGMA-4 | 8.9 | 0 | 17.9 | 845 |
| EVAGMA-5 | 9.4 | 0 | 14.6 | 643 |
| EVAGMA-6 | 9.11 | 0 | 14.3 | 275 |
| EVAGMA-7 | 8.64 | 0 | 14.41 | 900 |
| EGMA-8 | 4 | 0 | 0 | 100 |
| EGMA-9 | 4 | 0 | 0 | 500 |

Table 2 lists several styrene copolymers available from Kraton Polymers, Inc. (Houston, TX) that are useful for blending with bitumens to provide polymer-modified asphalts.

**Table 2**

| | Grade | Styrene content (weight %) | Comonomer | Description |
|---|---|---|---|---|
| SBS-1 | D1101 | 31 | butadiene | Linear triblock |
| SBS-2 | D1102 | 28 | butadiene | Linear triblock |
| SIS-1 | D1107 | 15 | isoprene | Linear triblock |

Other suitable asphalt modifers include:

| | |
|---|---|
| Wax-1: | Titan 7686 Wax from Honeywell |
| | The acid promoters below were purchased from Sigma-Aldrich (St. Louis, MO): |
| PPA: | polyphosphoric acid, commercial grade. |
| PSA: | phosphorous acid, commercial grade. |

Penetration Grade bitumen is commonly used in road surfacing and some industrial applications. A Penetration Test (ASTM D946-09 and EN12591-2009) determines the hardness of bitumen by measuring the depth (in tenths of a mm) to which a standard and a loaded needle will vertically penetrate in 5 seconds a sample of Bitumen maintained at a temperature of 25°C (77°F). Hence the softer the bitumen, the greater will be its number of penetration units (e.g. 80/100 asphalt is softer than 40/50 asphalt in this classification system). Thus, asphalt samples classified based on their penetration grade were obtained from Valero (San Antonio TX), Marathon Asphalt (Catlettsburg, Kentucky) Litvinov (Czech Republic), Repsol (Spain), Bapco (Qatar), and Rastanura (Saudi Arabia) and are. Although several of the asphalt samples have the same PG values, they are derived from different crude oil sources and exhibit different reactivity. A lot with qualitatively higher reactivity is designated "HR" and a lot with qualitatively lower reactivity is designated "LR".

### General Procedure for Blending Asphalt and Modifiers

A standard one-quart can was equipped with a heating mantle was used to for mixing asphalt and modifiers. Its lid was modified to include a center hole of about 1 cm in diameter to accommodate a stirring shaft and second hole of about 3 cm in diameter to accommodate a thermocouple probe. The stirring shaft was threaded through the lid so that the lid could be sealed on the sample can when the stirring shaft and motor are positioned to mix the sample.

Asphalt samples in 1-gallon cans were heated in a ventilated oven set at 165°C until they were warm enough to be poured into the one-quart can. The asphalt sample (300 g) was poured into the blending can and the lid and stirrer assembly were attached. The polymer modifier sample was added and the lid sealed tightly to the can. The asphalt and polymer were mixed for 30 to 180 minutes at 185°C to blend them, followed optionally by injection of the acid through a hole in the lid with continued mixing for one additional hour to further blend all ingredients. When the acid was not used, the mixing time was extended to 4 to 8 hours. Samples were removed and tested as described below.

Dissolution tests were conducted to characterize the ease with which the sample modifiers were dissolved in bitumen. The results are summarized in Table 3. For each run, 100 grams of Salamanca 67-S bitumen were heated to the specified temperature with agitation for about 20 minutes. Then 1.2% of the test EVAGMA modifier was added and the mixture was stirred for the specified time. The blend was then poured onto aluminum foil to form a thin layer and observed for any undissolved pellets. The pellets observed in the samples summarized in Table 3 were given qualitative ratings according to the listed criteria. They indicate the extent to which the pellets dissolved in the bitumen for the time and temperature indicated.

**Table 3**

| Rating | 1 | 2 | 3 | 4 | 5 | |
|---|---|---|---|---|---|---|
| Pellet condition | Soli d | Firm | Soft | Deformed | Soluble; pellets completely dissolved | |
| | | Modifier | | Temp, °C | Mixing time (minutes) | Rating |
| Comparative Example | | EVAGMA-2 | | 185 | 10 | 1 |
| | | EVAGMA-2 | | 185 | 15 | 1 |
| | | EVAGMA-2 | | 185 | 20 | 1 |
| | | EVAGMA-2 | | 185 | 45 | 5 |
| Example | | EVAGMA-5 | | 185 | 10 | 5 |
| | | EVAGMA-5 | | 185 | 15 | |
| | | EVAGMA-5 | | 185 | 20 | |
| Example | | EVAGMA-5 | | 165 | 10 | 5 |
| | | EVAGMA-5 | | 165 | 15 | |
| | | EVAGMA-5 | | 165 | 20 | |
| Example | | EVAGMA-5 | | 145 | 10 | 5 |
| | | EVAGMA-5 | | 145 | 15 | |
| | | EVAGMA-5 | | 145 | 20 | |
| Example | | EVAGMA-5 | | 135 | 10 | 5 |
| | | EVAGMA-5 | | 135 | 15 | |
| | | EVAGMA-5 | | 135 | 20 | |
| Example | | EVAGMA-5 | | 125 | 10 | 5 |
| | | EVAGMA-5 | | 125 | 15 | |
| | | EVAGMA-5 | | 125 | 20 | |

The results in Table 3 show little dissolution of EVAGMA-2 at 185°C during 20 minutes of mixing time. It took at least 45 minutes at 185°C for EVAGMA-2 to fully dissolve. Because there was essentially no dissolution of EVAGMA-2 at 185°C for short mixing times, its dissolution was not measured at 165°C and 145°C. The high MI EVAGMA-5 fully dissolved in 10 minutes or less at all temperatures from 125 to 185°C. The lower temperatures required to dissolve and react for these high MI modifiers could offer advantages in energy savings and reduced total time to produce a PMA.

The samples summarized in Tables 4, 5, 6 and 7 were prepared according to the General Procedure above, except where noted. Samples with a B prefix were the base bitumens without additives.

**Table 4**

| | | Modifier | | Acid | | Mixing Conditions before adding PPA | |
|---|---|---|---|---|---|---|---|
| Example | Asphalt | Name | Weight % | Name | Weight % | Time (min) | Temperature (°C) |
| B1 | Salamanca 67-S | -- | -- | -- | -- | -- | -- |
| 1 | Salamanca 67-S | EVAGMA -5 | 1.2 | PPA | 0.3 | 10 | 185 |
| 2 | Salamanca 67-S | EVAGMA -5 | 1.2 | PPA | 0.3 | 10 | 165 |
| 3 | Salamanca 67-S | EVAGMA -5 | 1.2 | PPA | 0.3 | 10 | 145 |
| 4 | Salamanca 67-S | EVAGMA -5 | 1.5 | PPA | 0.3 | 10 | 185 |
| 5 | Salamanca 67-S | EVAGMA -5 | 1.5 | PPA | 0.3 | 10 | 165 |
| 6 | Salamanca 67-S | EVAGMA -5 | 1.5 | PPA | 0.3 | 10 | 145 |
| C1 | Salamanca 67-S | EVAGMA -2 | 1.2 | PPA | 0.3 | 45 | 185 |
| C2 | Salamanca 67-S | EVAGMA -2 | 1.2 | PPA | 0.3 | 45 | 165 |
| B2 | Catlettsburg 64-22 | -- | -- | -- | -- | -- | -- |
| C3 | Catlettsburg 64-22 | EVAGMA -2 | 1.5 | PSA | 0.2 | 60 | 185 |
| 7 | Catlettsburg 64-22 | EVAGMA -6 | 1.5 | PPA | 0.2 | 60 | 185 |
| 8 | Catlettsburg 64-22 | EVAGMA -5 | 1.5 | PPA | 0.2 | 60 | 185 |
| 9 | Catlettsburg 64-22 | EVAGMA -7 | 1.5 | PPA | 0.2 | 60 | 185 |
| 10 | Catlettsburg 64-22 | EVAGMA -7 | 1.5 | PSA | 0.2 | 60 | 185 |
| B3 | Catlettsburg 64-22 | -- | -- | -- | -- | | |
| C4 | Catlettsburg 64-22 | EVAGMA -2 | 2.0 | -- | -- | | |
| C5 | Catlettsburg 64-22 | EVAGMA -2 | 2.5 | -- | -- | | |
| 11 | Catlettsburg 64-22 | EVAGMA -6 | 3.5 | -- | -- | | |
| 12 | Catlettsburg 64-22 | EVAGMA -6 | 4.0 | -- | -- | | |
| 13 | Catlettsburg 64-22 | EVAGMA -5 | 5.5 | | | | |
| 14 | Catletsburg 64-22 | EVAGMA -7 | 3.5 | | | | |
| B4 | Ajax 64-22 | -- | -- | -- | -- | | |
| 15 | Ajax 64-22 | EVAGMA -4 | 1.0 | PPA | 0.2 | 60 | 185 |
| C6 | Ajax 64-22 | Wax-1 | 2.5 | | | | |
| B5 | Kildair 58-28 | -- | -- | -- | -- | | |
| 16 | Kildair 58-28 | EVAGMA -4 | 1.0 | PPA | 0.2 | 60 | 185 |
| C7 | Kildair 58-28 | Wax-1 | 2.5 | | | | |

Samples C4, C5, 11, 12, 13, 14, C6, C7 included no acid and were mixed at 185°C for 5 hours. The properties of the blends were characterized as described below and are summarized in Tables 5 and 7.

Dynamic Shear Rheometer failure temperature and phase angle measurements were performed on the PMAs according to the ASSHTO T 315 or ASTM D7175-08 methods to determine the Rheological Properties of Asphalt Binder Using a Dynamic Shear Rheometer (DSR). This method, which is used in the Superpave PG asphalt binder specification, characterizes the viscous and elastic behavior of asphalt binders at medium to high temperatures. More specifically, the DSR test method is used to determine the dynamic shear modulus and phase angle of asphalt binders under dynamic or oscillatory shear using parallel plate geometry. The linear viscoelastic properties of the asphalt binders are derived from these values. The results of the DSR measurements are reported below in Table 5. Average values are reported if multiple trials were run on the same material.

The Pass/Fail temperatures are related to the temperature experienced by the pavement in the geographical area for which the asphalt binder is intended to be used. The Pass temperature is the value according to a Superpave classification scale to determine the asphalt performance grade (PG) where each value has a difference of 6°C, for example, 52, 58, 64, 70, 76, 82 or 88°C, and the Fail temperature is the actual value at which the modified asphalt fails.

The phase angle defines the resistance to shear deformation of the asphalt binder in the linear viscoelastic region. The phase angle may depend upon the magnitude of the shear strain. Phase angle for both unmodified and modified asphalt decreases with increasing shear strain. Desirably, phase angles are below 70° for most asphalt applications.

Elastic recovery was measured in accordance with ASTM D6084. Multiple Stress Creep and Recovery (MSCR) data were measured in accordance with ASTM D7405-10a. Ring and Ball tests were conducted according to ASTM D36/36M-14, on green material and after a Rolling Thin Film Oven Test ("RTFOT"). In the Ring and Ball test, two horizontal disks of bitumen, cast in shouldered brass rings, are heated at a controlled rate in a liquid bath while each supports a steel ball. The softening point is reported as the mean of the temperatures at which the two disks soften enough to allow each ball, enveloped in bitumen, to fall a distance of 25 mm (1.0 inch). Viscosity was measured using a Brookfield Rotational Viscometer according to ASTM D7741.

**Table 5**

| | DSR ASTM D7175 | | | Elastic Recovery | | Viscosity (mPa-second) |
|---|---|---|---|---|---|---|
| | Pass (°C) | Fail (°C) | Phase Angle (°) | ASTM D6084 at 25°C (%) | | |
| Example | | | | | 135°C | 160°C |
| B1 | 64 | 67.1 | 84.8 | | | |
| 1 | 82 | 84.6 | 66.12 | 55 | 2020 | 385 |
| 2 | 82 | 83.8 | 66.47 | 57.5 | 2050 | 388 |
| 3 | 82 | 82.6 | 63.67 | 62.5 | 1995 | 405 |
| 4 | 82 | 85.4 | 65.35 | 62.5 | 2438 | 455 |
| 5 | 82 | 85.4 | 64.52 | 60 | 2360 | 435 |
| 6 | 82 | 84 | 65.62 | 65 | 2035 | 388 |
| C1 | 82 | 85.9 | 60.65 | | | |
| C2 | 82 | 85.6 | 60.41 | | | |
| B2 | 64 | 64.1 | 86.39 | | | |
| C3 | 76 | 81 | 63 | 75 | 2800 | |
| 7 | 70 | 75.3 | 69.38 | 57.5 | 1165 | 300 |
| 8 | 70 | 74.9 | 70.1 | 63.75 | 1170 | 297 |
| 9 | 70 | 74.9 | 70.32 | 62.5 | 1220 | 265 |
| 10 | 76 | 77.8 | 71.8 | 61.3 | 1595 | 335 |
| B3 | 64 | 67.5 | 85.22 | | | |
| C4 | 82 | 83.2 | 66.21 | 79 | 4125 | |
| C5 | -- | -- | -- | -- | 9504 | Very thick, essentially gelled |
| 11 | 82 | 82 | 64.7 | 78.5 | 4682 | |
| 12 | -- | -- | -- | -- | -- | gelled |
| 13 | 82 | 82.5 | 64.21 | 76.5 | 5403 | 1415 |
| 14 | | 75 | 73.5 | 52.5 | 1705 | 440 |
| B4 | 64 | 67.5 | 86.34 | | | |
| 15 | 76 | 77 | 76.4 | 60 | 1180 | 265 |
| C6 | 76 | 78.9 | 81.67 | 17.5 | 745 | 205 |
| B5 | 58 | | | | | |
| 16 | 70 | 71.6 | 74.87 | 58 | 845 | 205 |
| C7 | 76 | 77 | 80.44 | 10 | 625 | 165 |

Examples 11-14 demonstrate the use of the high-MI modifiers for preparing high modifier concentrates at concentrations of 2.5 to 5.5 weight % that can be further mixed with additional asphalt. A low-MI modifier at 2.5 weight % provides an asphalt concentrate that is too viscous to be useful. Examples 15 and 16 demonstrate the use of high-MI modifiers for warm mix asphalt. Examples 15 and 16 demonstrate the use of the high-MI modifiers as potential warm mix asphalt candidates. They provide superior elasticity compared to Honeywell Titan^{™} wax, which is used to prepare Warm Mix PMA's. The high-MI polymer modifier provides low viscosity and a much higher degree of elasticity than wax modified asphalt, as measured by elastic recovery. In addition, the high-MI modifiers did not adversely affect low temperature properties (Bending Beam Rheometer, BBR), in contrast to the waxes. Additional examples of high-MI polymer modified asphalt are summarized in Table 6, and their properties are reported in Table 7. The asphalt used in Examples B7, C13, and 39 to 44 is believed to originate in Australia.

**Table 6**

| Example | **Asphalt** | **Name** | **Weight %** | **Modifier Name** | **Acid Weight %** |
|---|---|---|---|---|---|
| C8 | Litvinov 70/100 | EnBAGMA-1 | 2.5 | PPA | 0.3 |
| 17 | Litvinov 70/100 | EnBAGMA-3 | 2.5 | PPA | 0.2 |
| 18 | Litvinov 70/100 | EnBAGMA-4 | 2.5 | PPA | 0.2 |
| 19 | Litvinov 70/100 | EnBAGMA-5 | 2.5 | PPA | 0.2 |
| C9 | Litvinov 70/100 | EnBAGMA-2 | 1.5 | PPA | 0.2 |
| 20 | Litvinov 70/100 | EnBAGMA-3 | 1.5 | PPA | 0.2 |
| 21 | Litvinov 70/100 | EnBAGMA-4 | 1.5 | PPA | 0.2 |
| 22 | Litvinov 70/100 | EnBAGMA-5 | 1.5 | PPA | 0.2 |
| 23 | Litvinov 70/100 | EnBAGMA-5 | 3.0 | PPA | 0.2 |
| 24 | Litvinov 70/100 | EnBAGMA-5 | 3.5 | PPA | 0.2 |
| 25 | Litvinov 70/100 | EnBAGMA-5 | 4.0 | PPA | 0.2 |
| 26 | Litvinov 70/100 | EVAGMA-4 | 1.5 | PPA | 0.2 |
| 27 | Litvinov 70/100 | EVAGMA-4 | 2.5 | PPA | 0.2 |
| 28 | Litvinov 70/100 | EVAGMA-4 | 4.0 | PPA | 0.2 |
| C10 | Repsol 70/100 | EnBAGMA-1 | 2.0 | PPA | 0.3 |
| C11 | Repsol 70/100 | EVAGMA-2 | 1.5 | PPA | 0.1 |
| 29 | Repsol 70/100 | EnBAGMA-5 | 3.0 | PPA | 0.2 |
| 30 | Repsol 70/100 | EnBAGMA-5 | 3.5 | PPA | 0.2 |
| 31 | Repsol 70/100 | EVAGMA-4 | 3.5 | PPA | 0.2 |
| C12 | Rastanura 60/70 | EnBAGMA-1 | 1.8 | PPA | 0.2 |
| C12A | Rastanura 60/70 | EnBAGMA-1 | 1.8 | PPA | 0.2 |
| 32 | Rastanura 60/70 | EnBAGMA-3 | 1.8 | PPA | 0.2 |
| 33 | Rastanura 60/70 | EnBAGMA-3 | 2.5 | PPA | 0.2 |
| 34 | Rastanura 60/70 | EnBAGMA-3 | 2.5 | -- | -- |
| 35 | Rastanura 60/70 | EnBAGMA-5 | 1.8 | PPA | 0.2 |
| 36 | Rastanura 60/70 | EnBAGMA-5 | 2.5 | PPA | 0.2 |
| 37 | Rastanura 60/70 | EnBAGMA-5 | 2.5 | -- | -- |
| 38 | Rastanura 60/70 | EVAGMA-4 | 2.5 | -- | -- |
| B7 | Australia | -- | -- | -- | -- |
| C13 | Australia | EVAGMA-2 | 1.2 | PPA | 0.1 |
| 39 | Australia | EnBAGMA-3 | 1.2 | PPA | 0.2 |
| 40 | Australia | EnBAGMA-4 | 1.2 | PPA | 0.2 |
| 41 | Australia | EnBAGMA-5 | 1.2 | PPA | 0.2 |
| 42 | Australia | EnBAGMA-3 | 1.5 | PPA | 0.2 |
| 43 | Australia | EnBAGMA-4 | 1.5 | PPA | 0.2 |
| 44 | Australia | EnBAGMA-5 | 1.5 | PPA | 0.2 |
| B8 | Bapco 60/70 | -- | -- | -- | -- |
| 45 | Bapco 60/70 | EnBAGMA-3 | 2.5 | PPA | 0.3 |
| C14 | Bapco 60/70 | SBS-1 + 44/11 | 4.0 + 1.5 | Sira | 0.225 |
| C15 | Bapco 60/70 | EVAGMA-2 | 1.5 | -- | -- |
| C16 | Bapco 60/70 | EVAGMA-2 | 1.5 | PPA | 0.2 |
| 46 | Bapco 60/70 | EnBAGMA-5 | 2.5 | -- | -- |
| 47 | Bapco 60/70 | EnBAGMA-5 | 2.5 | PPA | 0.1 |
| 48 | Bapco 60/70 | EnBAGMA-5 | 2.5 | PPA | 0.2 |
| B9 | Tupras Izmi 50/70 | -- | -- | -- | -- |
| C17 | Tupras Izmi 50/70 | SBS-1 | 2.5 | -- | -- |
| C18 | Tupras Izmi 50/70 | SBS-1 | 2.5 | PSA | 0.3 |
| C19 | Tupras Izmi 50/70 | SBS-1 | 2.5 | PSA | 0.3 |
| | | EVAGMA-2 | 1.5 | | |
| C20 | Tupras Izmi 50/70 | SBS-1 | 2.5 | PSA | 0.3 |
| | | EVAGMA-2 | 2.0 | | |
| C21 | Tupras Izmi 50/70 | SBS-1 | 2.5 | PSA | 0.3 |
| | | EVAGMA-2 | 3.0 | | |
| 49 | Tupras Izmi 50/70 | SBS-1 | 2.5 | PSA | 0.3 |
| | | EVAGMA-4 | 1.5 | | |
| 50 | Tupras Izmi 50/70 | SBS-1 | 2.5 | PSA | 0.3 |
| | | EVAGMA-4 | 2.0 | | |
| 51 | Tupras Izmi 50/70 | SBS-1 | 2.5 | PSA | 0.3 |
| | | EVAGMA-4 | 3.0 | | |
| 52 | Tupras Izmi 50/70 | SBS-1 | 2.5 | PSA | 0.3 |
| | | EVAGMA-3 | 2.0 | | |
| 53 | Tupras Izmi 50/70 | SBS-1 | 2.5 | PSA | 0.3 |
| | | EnBAGMA-5 | 2.0 | | |
| C22 | Tupras Izmi 50/70 | SBS-1 | 4.0 | -- | -- |
| C23 | Tupras Izmi 50/70 | SBS-1 | 4.0 | PSA | 0.3 |
| 54 | Tupras Izmi 50/70 | SBS-1 | 4.0 | PSA | 0.3 |
| | | EVAGMA-4 | 1.5 | | |
| 55 | Tupras Izmi 50/70 | SBS-1 | 4.0 | PSA | 0.3 |
| | | EVAGMA-4 | 3.0 | | |
| 56 | Catlettsburg 64-22 | EGMA-8 | 3 | PSA | 0.5 |
| 57 | Catlettsburg 64-22 | EGMA-9 | 6 | PSA | 0.5 |
| 58 | Catlettsburg 64-22 | EGMA-9 | 5 | PSA | 0.5 |
| 59 | Catlettsburg 64-22 | EGMA-9 | 4 | PSA | 0.5 |
| 60 | Catlettsburg 64-22 | EGMA-9 | 3 | PSA | 0.5 |
| 61 | Catlettsburg 64-22 | EGMA-9 | 6 | -- | 0 |
| 62 | Catlettsburg 64-22 | EGMA-9 | 5 | -- | 0 |
| 63 | Catlettsburg 64-22 | EGMA-9 | 4 | -- | 0 |

**Table 7**

| | DSR ASTM D7175 | | | Elastic Recovery | MSCR | | | Ring and ball, °C | |
|---|---|---|---|---|---|---|---|---|---|
| Example | Pass | Fail | Phase Angle | ASTM D6084 | ASTM D7504-10a | Viscosity (Pa-second) | | | |
| | (°C) | (°C) | (°) | at 25 °C (%) | Jnr (3.2) | 135°C | 160°C | green | RTFOT |
| C8 | 82 | 84.54 | 55.03 | 85.5 | 0.2668 | 2.6 | 610 | 68.4 | 75.5 |
| 17 | 76 | 80.7 | 56.19 | 89 | 0.3919 | 1.8 | 440 | 66.4 | 74.3 |
| 18 | 76 | 80.14 | 58.08 | 87 | 0.5543 | 1.44 | 354 | 64.1 | 71.5 |
| 19 | 76 | 78.12 | 60.12 | 84.5 | 0.8092 | 1.247 | 322 | 62.9 | 69.7 |
| C9 | 88 | 74.81 | 63.61 | 84 | 0.5043 | 1.105 | 290 | 61.9 | 68.3 |
| 20 | 88 | 72.95 | 66.76 | 72 | 0.9011 | 0.791 | 224 | 58.1 | 65.1 |
| 21 | 88 | 72.91 | 67.46 | 82 | 1.934 | 0.773 | 221 | 57.6 | 61.4 |
| 22 | 70 | 71.49 | 69.23 | 69 | 1.535 | 0.672 | 195 | 55.6 | 63 |
| 23 | 82 | 83.52 | 55.18 | 83.5 | 0.1423 | 1.904 | 454 | 67 | 72.3 |
| 24 | 82 | 87.82 | 51.42 | 86 | 0.0779 | 2.65 | 560 | 64.9 | 75.9 |
| 25 | 88 | 91.16 | 50.64 | 87 | 0.0801 | 3.89 | 784 | 66.9 | 77.6 |
| 26 | 70 | 72.01 | 71.17 | 68 | 7.085 | 0.64 | 189 | 54.8 | 60.4 |
| 27 | 76 | 78.19 | 62.46 | 81.5 | 1.091 | 1.14 | 300 | 61.8 | 68.7 |
| 28 | 82 | 84.19 | 55.42 | 84 | 0.441 | 2.03 | 483 | 66.7 | 72.3 |
| C10 | 88 | 93.12 | 53.87 | 82 | 0.25 | -- | -- | 72.2 | 76.5 |
| C11 | 82 | 82.93 | 58.76 | 81 | 0.209 | -- | -- | 71 | 78.2 |
| 29 | 100 | 104.37 | 48.27 | 84 | 0.512 | 6.3 | 1095 | 78.8 | 76.2 |
| 30 | 100 | 100.78 | 51.76 | 87.9 | 0.013 | 9.58 | 1560 | 81 | 82.3 |
| 31 | 94 | 98.73 | 51.77 | 82.8 | 0.133 | 4.79 | 916 | 75.3 | 80.9 |
| C12 | 76 | 77.9 | 69.21 | | 1.408 | | | 59.4 | |
| C12A | 82 | 82.63 | 68.9 | | 1.119 | | | 63.4 | |
| 32 | 76 | 81.88 | 67.76 | | 1.159 | | | 63.6 | |
| 33 | 82 | 86.43 | 64.73 | | 0.4646 | | | 67.2 | |
| 34 | 76 | 76.33 | 62.9 | | 3.216 | | | 62.9 | |
| 35 | 76 | 80.91 | 62.7 | | 1.564 | | | 62.7 | |
| 36 | 88 | 89.37 | 67.85 | | 0.5669 | | | 69.1 | |
| 37 | 70 | 73.96 | 76.95 | | 4.991 | | | 56.1 | |
| 38 | 70 | 72.86 | 80.58 | | 6.492 | | | 55.1 | |
| B7 | 64 | 69.55 | 86.66 | -- | | -- | | | 50.7 |
| C13 | 76 | 79.29 | 74.85 | 68.5 | | 2.333 | 0.944 | 199 | 60.8 |
| 39 | 76 | 77.16 | 77.28 | 63 | | 4.303 | 1.033 | 209 | 58.8 |
| 40 | 82 | 85.3 | 76.3 | 49.5 | | 1.7 | 1.487 | 321 | 61.1 |
| 41 | 76 | 76.85 | 77.53 | 59.5 | | 4.545 | 0.896 | 204 | 58.4 |
| 42 | 82 | 83.71 | 74.83 | 54.5 | | 1.974 | 1.5 | 270 | 64 |
| 43 | 82 | 83.66 | 75.29 | 58.9 | | 2.082 | 1.26 | 280 | 64.4 |
| 44 | 76 | 77.87 | 75.92 | 63 | | 5.673 | 0.98 | 190 | 58.8 |
| B8 | 64 | 66.04 | 87.6 | | | -- | | | 47.6 |
| 45 | Gelled after mixing | | | | | | | | |
| C14 | 88 | 92.78 | 50.46 | | | 0.2003 | | | |
| C15 | 70 | 73.17 | 78.37 | | | 6.016 | | | |
| C16 | Gelled after adding PPA | | | | | | | | |
| 46 | | 72.39* | 73.93* | | | 6.321 | | | |
| 47 | | 73.84* | 69.07* | | | 4.165 | | | |
| 48 | Gelled after adding PPA | | | | | | | | |
| | | | | | | | | 155°C | |
| | | | | | | | (mPa-Sec) | | |
| B9 | 64 | 65.56 | 87.19 | | | | | | 47.8 |
| C17 | 70 | 72.74 | 84.24 | | | 8.529 | 663 | 280 | 54 |
| C18 | 76 | 76.92 | 80.12 | | | 4.252 | 858 | 339 | 56.5 |
| C19 | 88 | 89.89 | 63.74 | | | 0.5108 | 3540 | 115 | 70.7 |
| C20 | 94 | 94.25 | 61.21 | | | 0.1035 | 7460 | 2236 | 77.7 |
| C21 | Gelled after adding PPA | | | | | | | | |
| 49 | 82 | 85.67 | 65.97 | | | 0.7638 | 1900 | 643 | 65.3 |
| 50 | 88 | 90.34 | 64.18 | | | 0.5037 | 2653 | 844 | 68.9 |
| 51 | 94 | 97.53 | 59.9 | | | 0.1098 | 4810 | 1373 | 76.3 |
| 52 | 88 | 91.83 | 64.02 | | | 0.469 | 4730 | 1708 | 73.6 |
| 53 | 94 | 95.95 | 59.65 | | | 0.1852 | 4230 | 1170 | 75.7 |
| C22 | 76 | 76.59 | 81.13 | | | 6.096 | 806 | 375 | 57 |
| C23 | 82 | 82.14 | 77.32 | | | 2.454 | 1350 | 512 | 63.5 |
| 54 | 88 | 92.46 | 63.13 | | | 0.7378 | 3673 | 1128 | 73.5 |
| 55 | 106 | 106 | 57.98 | | | 0.045 | 10240 | 2553 | 83.3 |

| | | | | | | | | | |
|---|---|---|---|---|---|---|---|---|---|
| Note: Values designated with an asterisk (*) were measured after RTFOT. | | | | | | | | | |

A significant reduction (50% - 70%) in the viscosity of the SBS blends was observed when the epoxy-functionalized ethylene copolymer had a high melt index, compared to blends with epoxy-functionalized ethylene copolymers having a standard melt index. Surprisingly, differences in PG Pass/Fail temperature were about 4 to 5°C, which is less than one Performance Grade (6°C). Utilizing high-MI epoxy-functionalized ethylene copolymer vs. standard MI epoxy-functionalized ethylene copolymer allows a higher concentration of epoxy-functionalized ethylene copolymer in the SBS blends, as evidenced by reduced gelation at similar polymer weight ratios.

Several PMAs were subjected to the cigar tube separation test (CTST; ASTM D5892-96A). An aluminum tube (5.5 in in length with a diameter of 1 in) was filled with the PMA, sealed, and aged in an oven for 48 hours at 163°C. The tube was then quench-cooled in a freezer at -20°C. The frozen specimen was cut into two pieces (top and bottom) and a Ring and Ball test was conducted on each piece at 25°C. No difference or a minimal difference in Ring and Ball results between the top and bottom pieces shows that little or no separation has occurred upon heat-aging the PMA. The results of these experiments are set forth in Table 8.

**Table 8**

| | | | CTST; ASTM D5892-96A | | |
|---|---|---|---|---|---|
| Example No. | R&B °C, green | 204C Viscosity (mPa-second) | R&B: TOP (°C) | R&B: BOTTOM (°C) | |
| 56 | 94.6 | 140 | 92.2 | | 91.6 |
| 57 | 99.2 | 195 | 95.8 | | 95.3 |
| 58 | 97.9 | 160 | 98.1 | | 98.7 |
| 59 | 95.2 | 125 | 96.5 | | 96.5 |
| 60 | 92 | 120 | 94.4 | | 92.4 |
| 61 | 91.7 | 200 | 101.4 | | 88 |
| 62 | 89.5 | 160 | 101.6 | | 79.5 |
| 63 | 83.7 | 115 | 92.1 | | 74.6 |

The results in Table 8 show that the R&B viscosity of the PMA increased significantly when the polymer included no alkyl acrylate (nBA) or vinyl acetate comonomer. This effect is demonstrated by a comparison of the R&B viscosities of Examples 56 to 63 to those of Examples 17 to 55. In addition, these results demonstrate that including PSA as a co-reactant increases R&B viscosity. In addition, PMAs that include PSA exhibit significantly improved stability upon heat-aging, as evidenced by a decrease in PMA separation.

## Claims

1. A polymer-modified asphalt composition comprising:
(a) 80 to 99.4 weight % of an asphalt;
(b) 0.5 to 20 weight % of an E/X/Y/Z epoxy-functionalized ethylene copolymer, wherein E is the copolymerized repeat unit -(CH₂CH₂)- derived from ethylene; X is the copolymerized repeat unit - (CH₂CR¹R²)-, wherein R¹ is a hydrogen atom, a methyl group, or an ethyl group, and R² is a carboalkoxy, acyloxy, or alkoxy group comprising 1 to 10 carbon atoms; Y is the copolymerized repeat unit -(CH₂CR³R⁴)-, wherein R³ is hydrogen or methyl and R⁴ is carboglycidoxy or glycidoxy; and Z is a copolymerized repeat unit derived from one or more comonomers selected from the group consisting of carbon monoxide, sulfur dioxide, and acrylonitrile; wherein the E/X/Y/Z epoxy-functionalized ethylene copolymer comprises 0 to 40 wt% of X, 1 to 25 wt% of Y, and 0 to 10 wt% of Z; wherein the weight percentages of the copolymerized repeat units E, X, Y and Z are complementary and based on the total weight of the E/X/Y/Z epoxy-functionalized ethylene copolymer; and wherein the E/X/Y/Z epoxy-functionalized ethylene copolymer has a melt flow index of from 100 to 900 g/10 min, measured according to ASTM D1238-65T, Condition E, at 190°C and under a load of 2160g; and, optionally,
(c) 0.025 to 1 weight% of a co-reactant, wherein the co-reactant comprises one or more materials selected from the group consisting of polyphosphoric acid, phosphorous acid, and trimellitic anhydride;
wherein the weight percentages of the asphalt, the E/X/Y/Z epoxy-functionalized ethylene copolymer, and the co-reactant are complementary and based on the total weight of the asphalt, the E/X/Y/Z epoxy-functionalized ethylene copolymer, and the co-reactant.

2. The polymer-modified asphalt composition of claim 1, wherein X comprises one or more copolymerized residues derived from comonomers selected from the group consisting of an alkyl acrylate, an alkyl methacrylate, a vinyl ester, or an alkyl vinyl ether; and Y comprises one or more copolymerized residues derived from comonomers selected from the group consisting of glycidyl acrylate, glycidyl methacrylate, glycidyl butyl acrylate, glycidyl vinyl ether.

3. The polymer-modified asphalt composition of claim 1, wherein the ethylene copolymer is an ethylene glycidyl methacrylate dipolymer, an ethylene vinyl acetate glycidyl methacrylate terpolymer, an ethylene n-butyl acrylate glycidyl methacrylate terpolymer, or an ethylene methyl acrylate glycidyl methacrylate terpolymer.

4. The polymer-modified asphalt composition of claim 1, wherein Y comprises a glycidyl moiety and wherein the E/X/Y/Z epoxy-functionalized ethylene copolymer comprises 1 to 15 weight % of Y.

5. The polymer-modified asphalt composition of claim 1, wherein Y comprises a glycidyl moiety and wherein the E/X/Y/Z epoxy-functionalized ethylene copolymer comprises 15.1 to 25 weight % of Y.

6. The polymer-modified asphalt composition of claim 1, wherein the E/X/Y/Z epoxy-functionalized ethylene copolymer has a melt flow index from 100 to 700 grams/10 minutes.

7. The polymer-modified asphalt composition of claim 1, wherein the E/X/Y/Z epoxy-functionalized ethylene copolymer has a melt flow index from 250 to 700 grams/10 minutes.

8. The polymer-modified asphalt composition of claim 1, wherein the co-reactant comprises one or more materials selected from the group consisting of polyphosphoric acid, phosphorous acid, and trimellitic anhydride.

9. The polymer-modified asphalt composition of claim 1, further comprising one or more nonreactive polymers selected from the group consisting of an ethylene acrylate copolymer; an ethylene methacrylate copolymer; an ethylene vinyl acetate copolymer; a styrene/conjugated-diene block copolymer comprising butadiene, isoprene, ethylene butene, or 1,3-pentadiene; and a polyolefin.

10. The polymer-modified asphalt composition of claim 9, wherein the styrene/conjugated- diene block copolymer comprises a di-, tri- or poly-block copolymer having a linear or radial structure, with or without a random junction, preferably wherein the styrene/conjugated-diene block copolymer comprises a diblock A-B type copolymer; linear (triblock) A-B-A type copolymer; or radial (A-B)ₙ type copolymers; wherein A is a copolymerized repeat unit derived from styrene and B is a copolymerized repeat unit derived from a conjugated diene.

11. The polymer-modified asphalt composition of claim 10, wherein the styrene/conjugated-diene block copolymer comprises 10 to 50 weight percent of copolymerized repeat units derived from styrene and 50 to 90 weight percent of copolymerized repeat units derived from a conjugated-diene, based on the total weight of the styrene/conjugated-diene block copolymer.

12. The polymer-modified asphalt composition of claim 1, further comprising one or more of a flux oil, a liquid plasticizer, an amine scavenger, and a hydrogen sulfide scavenger; and preferably wherein the flux oil comprises a petroleum-based product or one or more of an aromatic oil, a paraffinic oil, a mineral oil, a vegetable oil, and a shortening; and preferably wherein the liquid plasticizer comprises one or more of a dicarboxylic ester-based plasticizer, a tricarboxylic ester-based plasticizer, and an acetic acid ester of a monoglyceride, a trimellitate, an adipate, a benzoate, an adipic acid polyester, a polyetherester, an epoxy ester, or a maleate.

13. A road pavement material or a roofing material comprising the polymer-modified asphalt composition of claim 1.

14. A method for preparing the polymer-modified asphalt composition of claim 1, said method comprising the steps of:
(1) providing the E/X/Y/Z epoxy-functionalized ethylene copolymer and optionally further providing a nonreactive polymer;
(2) heating and mixing the E/X/Y/Z epoxy-functionalized ethylene copolymer and the optional nonreactive polymer with an asphalt to provide a polymer-asphalt blend; and optionally
(3) mixing a co-reactant with the polymer asphalt blend, wherein the co-reactant comprises one or more materials selected from the group consisting of polyphosphoric acid, phosphorous acid, and trimellitic anhydride.

15. The method of claim 14, wherein step (2) comprises heating the asphalt to 120 to 200°C; and adding the E/X/Y/Z epoxy -functionalized ethylene copolymer and optionally the nonreactive polymer to the heated asphalt with stirring for 10 to 30 minutes while maintaining the temperature of the polymer-asphalt blend at 120 to 200°C; and wherein step (3) comprises adding the co-reactant to the heated polymer asphalt-blend with stirring for 10 minutes to 4 hours while maintaining the temperature of the polymer-asphalt blend at 120 to 200°C; and, optionally,
wherein the E/X/Y/Z epoxy -functionalized ethylene copolymer and the optional nonreactive polymer are dissolved in a flux oil or in a liquid plasticizer prior to mixing with the asphalt.

## Patentansprüche

1. Polymermodifizierte Asphaltzusammensetzung, umfassend:
(a) zu 80 bis 99,4 Gew.-% eines Asphalts;
(b) zu 0,5 bis 20 Gew.-% ein E/X/Y/Z-epoxidfunktionalisiertes EthylenCopolymer, worin E die von Ethylen abgeleitete copolymerisierte Wiederholungseinheit -(CH₂CH₂)- ist; X die copolymerisierte Wiederholungseinheit -(CH₂CR¹R²)- ist, worin R¹ ein Wasserstoffatom, eine Methylgruppe oder eine Ethylgruppe ist und R² eine Carboalkoxy-, Acyloxy- oder Alkoxygruppe ist, die 1 bis 10 Kohlenstoffatome umfasst; Y die copolymerisierte Wiederholungseinheit - (CH₂CR³R⁴)- ist, worin R³ Wasserstoff oder Methyl ist und R⁴ Carboglycidoxy oder Glycidoxy ist; und Z eine copolymerisierte Wiederholungseinheit ist, die von einem oder mehreren Comonomeren abgeleitet ist, ausgewählt aus der Gruppe bestehend aus Kohlenmonoxid, Schwefeldioxid und Acrylnitril; wobei das E/X/Y/Z-epoxidfunktionalisierte Ethylencopolymer 0 bis 40 Gew.-% X, 1 bis 25 Gew.-% Y und 0 bis 10 Gew.-% Z umfasst; wobei die Gewichtsprozentsätze der copolymerisierten Wiederholungseinheiten E, X, Y und Z komplementär sind und auf dem Gesamtgewicht des E/X/Y/Z-epoxidfunktionalisierten Ethylencopolymers basieren; und wobei das E/X/Y/Z-epoxidfunktionalisierte Ethylencopolymer einen Schmelzflussindex von 100 bis 900 g/10 min aufweist, gemessen gemäß ASTM D1238-65T, Bedingung E, bei 190 °C und unter einer Last von 2160 g; und optional
(c) zu 0,025 bis 1 Gewichtsprozent eines Coreaktanten, wobei der Coreaktant ein oder mehrere Materialien umfasst, ausgewählt aus der Gruppe bestehend aus Polyphosphorsäure, Phosphor(III)-säure und Trimellitsäureanhydrid;
wobei die Gewichtsprozentsätze des Asphalts, des E/X/Y/Z-epoxidfunktionalisierten Ethylencopolymers und des Coreaktanten komplementär sind und auf dem Gesamtgewicht des Asphalts, des E/X/Y/Z epoxidfunktionalisierten Ethylencopolymers und des Coreaktanten basieren.

2. Polymermodifizierte Asphaltzusammensetzung nach Anspruch 1, wobei X einen oder mehrere copolymerisierte Reste umfasst, die von Comonomeren abgeleitet sind, die aus der Gruppe ausgewählt sind, bestehend aus einem Alkylacrylat, einem Alkylmethacrylat, einem Vinylester oder einem Alkylvinylether; und Y einen oder mehrere copolymerisierte Reste umfasst, die von Comonomeren abgeleitet sind, die aus der Gruppe ausgewählt sind, bestehend aus Glycidylacrylat, Glycidylmethacrylat, Glycidylbutylacrylat und Glycidylvinylether.

3. Polymermodifizierte Asphaltzusammensetzung nach Anspruch 1, wobei das Ethylencopolymer ein Ethylen-Glycidylmethacrylat-Dipolymer, ein Ethylen-Vinylacetat-Glycidylmethacrylat-Terpolymer, ein Ethylen-n-Butylacrylat-Glycidylmethacrylat-Terpolymer oder ein Ethylen-Methylacrylat-Glycidylmethacrylat-Terpolymer ist.

4. Polymermodifizierte Asphaltzusammensetzung nach Anspruch 1, wobei Y einen Glycidylrest umfasst und wobei das E/X/Y/Z-epoxidfunktionalisierte Ethylencopolymer 1 bis 15 Gew.-% Y umfasst.

5. Polymermodifizierte Asphaltzusammensetzung nach Anspruch 1, wobei Y einen Glycidylrest umfasst und wobei das E/X/Y/Z-epoxidfunktionalisierte Ethylencopolymer 15,1 bis 25 Gew.-% Y umfasst.

6. Polymermodifizierte Asphaltzusammensetzung nach Anspruch 1, wobei das E/X/Y/Z-epoxidfunktionalisierte Ethylencopolymer einen Schmelzflussindex von 100 bis 700 Gramm/10 Minuten aufweist.

7. Polymermodifizierte Asphaltzusammensetzung nach Anspruch 1, wobei das E/X/Y/Z-epoxidfunktionalisierte Ethylencopolymer einen Schmelzflussindex von 250 bis 700 Gramm/10 Minuten aufweist.

8. Polymermodifizierte Asphaltzusammensetzung nach Anspruch 1, wobei der Coreaktant ein oder mehrere Materialien umfasst, ausgewählt aus der Gruppe bestehend aus Polyphosphorsäure, Phosphor(III)-säure und Trimellitsäureanhydrid.

9. Polymermodifizierte Asphaltzusammensetzung nach Anspruch 1, die außerdem ein oder mehrere nichtreaktive Polymere umfasst, ausgewählt aus der Gruppe bestehend aus einem Ethylen-Acrylat-Copolymer; einem Ethylen-Methacrylat-Copolymer; einem Ethylen-Vinylacetat-Copolymer; einem Styrol/konjugiertes-Dien-Blockcopolymer, das Butadien, Isopren, Ethylen-Buten oder 1,3-Pentadien umfasst; und einem Polyolefin.

10. Polymermodifizierte Asphaltzusammensetzung nach Anspruch 9, wobei das Styrol/konjugiertes-Dien-Blockcopolymer ein Di-, Tri- oder Polyblockcopolymer mit einer linearen oder radialen Struktur mit oder ohne statistische Verbindungsstelle umfasst, wobei vorzugsweise das Styrol/konjugiertes-Dien-Blockcopolymer ein Diblock-Copolymer vom Typ A-B; ein lineares (Triblock-)Copolymer von Typ A-B-A; oder radiale Copolymere vom Typ (A-B)ₙ umfasst; wobei A eine copolymerisierte Wiederholungseinheit ist, die von Styrol abgeleitet ist, und B eine copolymerisierte Wiederholungseinheit ist, die von einem konjugierten Dien abgeleitet ist.

11. Polymermodifizierte Asphaltzusammensetzung nach Anspruch 10, wobei das Styrol/konjugiertes-Dien-Blockcopolymer 10 bis 50 Gewichtsprozent copolymerisierte Wiederholungseinheit, die von Styrol abgeleitet sind, und 50 bis 90 Gewichtsprozent copolymerisierte Wiederholungseinheit, die von einem konjugierten Dien abgeleitet sind, bezogen auf das Gesamtgewicht des Styrol/konjugiertes-Dien-Blockcopolymers, umfasst.

12. Polymermodifizierte Asphaltzusammensetzung nach Anspruch 1, ferner umfassend eines oder mehrere von einem Flussöl, einem flüssigen Weichmacher, einem Aminfänger und einem Schwefelwasserstofffänger; und wobei das Flussöl vorzugsweise ein Produkt auf Erdölbasis oder eines oder mehrere von einem aromatischen Öl, einem Paraffinöl, einem Mineralöl, einem Pflanzenöl und einem Fett umfasst; und vorzugsweise wobei der flüssige Weichmacher ein oder mehrere von einem Weichmacher auf Dicarbonsäureesterbasis, einem Weichmacher auf Tricarbonsäureesterbasis und einem Essigsäureester von einem Monoglycerid, einem Trimellitat, einem Adipat, einem Benzoat, einem Adipinsäurepolyester, einem Polyetherester, einem Epoxidester oder einem Maleat umfasst.

13. Straßenbelagmaterial oder Dachmaterial, das die polymermodifizierte Asphaltzusammensetzung nach Anspruch 1 umfasst.

14. Verfahren zum Herstellen der polymermodifizierten Zusammensetzung nach Anspruch 1, wobei das Verfahren die folgenden Schritte umfasst:
(1) Bereitstellen des E/X/Y/Z-epoxidfunktionalisierten Ethylencopolymers und optional zusätzlich Bereitstellen eines nichtreaktiven Polymers;
(2) Erwärmen und Mischen des E/X/Y/Z-epoxidfunktionalisierten Ethylencopolymers und des optionalen nichtreaktiven Polymers mit einem Asphalt, um eine Polymer-Asphalt-Mischung bereitzustellen; und optional
(3) Mischen eines Coreaktanten mit der Polymer-Asphalt-Mischung, wobei der Coreaktant ein oder mehrere Materialien umfasst, ausgewählt aus der Gruppe bestehend aus Polyphosphorsäure, Phosphor(III)-säure und Trimellitsäureanhydrid.

15. Verfahren nach Anspruch 14, wobei Schritt (2) das Erwärmen des Asphalts auf 120 bis 200 °C umfasst; und Hinzufügen des E/X/Y/Z-epoxidfunktionalisierten Ethylencopolymers und optional des nichtreaktiven Polymers zu dem erwärmten Asphalt unter Rühren für 10 bis 30 Minuten, während die Temperatur der Polymer-Asphalt-Mischung bei 120 bis 200 °C gehalten wird; und wobei Schritt (3) das Zugeben des Coreaktanten zu der erwärmten Polymer-Asphalt-Mischung unter Rühren für 10 Minuten bis 4 Stunden umfasst, während die Temperatur der Polymer-Asphalt-Mischung bei 120 bis 200 °C gehalten wird; und wobei optional das E/X/Y/Z-epoxidfunktionalisierte Ethylencopolymer und das optionale nichtreaktive Polymer vor dem Mischen mit dem Asphalt in einem Flussöl oder einem flüssigen Weichmacher gelöst werden.

## Revendications

1. Composition d'asphalte modifié par polymère, comprenant :
(a) 80 à 99,4 % en poids d'un asphalte ;
(b) 0,5 à 20 % en poids d'un copolymère d'éthylène à fonction époxy E/X/Y/Z, dans laquelle E représente l'unité de répétition copolymérisée -(CH₂CH₂)- dérivée de l'éthylène ; X représente l'unité de répétition copolymérisée -(CH₂CR¹R²)-, où R¹ représente un atome d'hydrogène, un groupe méthyle ou un groupe éthyle, et R² représente un carboalcoxy, un acyloxy ou un groupe alcoxy comprenant de 1 à 10 atomes de carbone ; Y représente l'unité de répétition copolymérisée - (CH₂CR³R⁴)-, où R³ représente hydrogène ou méthyle et R⁴ représente carboglycidoxy ou glycidoxy ; et Z représente une unité de répétition copolymérisée dérivée d'un ou plusieurs comonomères choisis dans le groupe constitué de monoxyde de carbone, de dioxyde de soufre et d'acrylonitrile ; dans laquelle le copolymère d'éthylène à fonction époxy E/X/Y/Z comprend de 0 à 40 % en poids de X, de 1 à 25 % en poids de Y, et de 0 à 10 % en poids de Z ; dans laquelle les pourcentages en poids des unités de répétition copolymérisées de E, X, Y et Z sont complémentaires et basés sur le poids total du copolymère d'éthylène à fonction époxy E/X/Y/Z ; et dans laquelle le copolymère d'éthylène à fonction époxy E/X/Y/Z a un indice de fluidité compris entre 100 et 900 g/10 min, mesuré selon la norme ASTM D1238-65T, condition E, à 190 °C et sous une charge de 2 160 g ; et, éventuellement,
(c) 0,025 à 1 % en poids d'un coréactif, dans laquelle le coréactif comprend un ou plusieurs matériaux choisis dans le groupe constitué d'acide polyphosphorique, d'acide phosphoreux et d'anhydride trimellitique ;
dans laquelle les pourcentages en poids de l'asphalte, du copolymère d'éthylène à fonction époxy E/X/Y/Z et du coréactif sont complémentaires et basés sur le poids total de l'asphalte, du copolymère d'éthylène à fonction époxy E/X/Y/Z et du coréactif.

2. Composition d'asphalte modifié par polymère selon la revendication 1, dans laquelle X comprend un ou plusieurs résidus copolymérisés dérivés de comonomères choisis dans le groupe constitué d'un acrylate d'alkyle, d'un méthacrylate d'alkyle, d'un ester de vinyle ou d'un éther d'alkyle et de vinyle ; et Y comprend un ou plusieurs résidus copolymérisés dérivés de comonomères choisis dans le groupe constitué d'acrylate de glycidyle, de méthacrylate de glycidyle, d'acrylate de glycidyle et de butyle, d'éther de glycidyle et de vinyle.

3. Composition d'asphalte modifié par polymère selon la revendication 1, dans laquelle le copolymère d'éthylène est un dipolymère d'éthylène et de méthacrylate de glycidyle, un terpolymère d'éthylène et d'acétate de vinyle et de méthacrylate de glycidyle, un terpolymère d'éthylène et d'acrylate de n-butyle et de méthacrylate de glycidyle, ou un terpolymère d'éthylène et d'acrylate de méthyle et de méthacrylate de glycidyle.

4. Composition d'asphalte modifié par polymère selon la revendication 1, dans laquelle Y comprend un groupement glycidyle et dans laquelle le copolymère d'éthylène à fonction époxy E/X/Y/Z comprend de 1 à 15 % en poids de Y.

5. Composition d'asphalte modifié par des polymères selon la revendication 1, dans laquelle Y comprend un groupement glycidyle et dans laquelle le copolymère d'éthylène à fonction époxy E/X/Y/Z comprend de 15,1 à 25 % en poids de Y.

6. Composition d'asphalte modifié par polymère selon la revendication 1, dans laquelle le copolymère d'éthylène à fonction époxy E/X/Y/Z a un indice de fluidité compris entre 100 et 700 grammes/10 minutes.

7. Composition d'asphalte modifié par polymère selon la revendication 1, dans laquelle le copolymère d'éthylène à fonction époxy E/X/Y/Z a un indice de fluidité compris entre 250 et 700 grammes/10 minutes.

8. Composition d'asphalte modifié par polymère selon la revendication 1, dans laquelle le coréactif comprend un ou plusieurs matériaux choisis dans le groupe constitué d'acide polyphosphorique, d'acide phosphoreux et d'anhydride trimellitique.

9. Composition d'asphalte modifié par polymère selon la revendication 1, comprenant en outre un ou plusieurs polymères non réactifs choisis dans le groupe constitué d'un copolymère d'éthylène et d'acrylate ; un copolymère d'éthylène et de méthacrylate ; un copolymère d'éthylène et d'acétate de vinyle ; un copolymère séquencé styrène/diène conjugué comprenant du butadiène, de l'isoprène, de l'éthylènebutène ou du 1,3-pentadiène ; et une polyoléfine.

10. Composition d'asphalte modifié par polymère selon la revendication 9, dans laquelle le copolymère séquencé styrène/diène conjugué comprend un copolymère di-, tri- ou poly-séquencé ayant une structure linéaire ou radiale, avec ou sans jonction aléatoire, de préférence dans laquelle le copolymère séquencé styrène/diène conjugué comprend un copolymère diséquencé de type A-B ; un copolymère linéaire (triséquencé) de type A-B-A ; ou des copolymères de type (A-B)ₙ radial ; dans laquelle A représente une unité de répétition copolymérisée dérivée du styrène et B représente une unité de répétition copolymérisée dérivée d'un diène conjugué.

11. Composition d'asphalte modifié par polymère selon la revendication 10, dans laquelle le copolymère séquencé styrène/diène conjugué comprend 10 à 50 pour cent en poids d'unités de répétition copolymérisées dérivées du styrène et 50 à 90 pour cent en poids d'unités de répétition copolymérisées dérivées d'un diène conjugué, sur la base du poids total du copolymère séquencé styrène/diène conjugué.

12. Composition d'asphalte modifié par polymère selon la revendication 1, comprenant en outre un ou plusieurs parmi une huile de fluxage, un plastifiant liquide, un piégeur d'amine et un piégeur de sulfure d'hydrogène ; et de préférence dans laquelle l'huile de fluxage comprend un produit à base de pétrole ou une ou plusieurs parmi une huile aromatique, une huile paraffinique, une huile minérale, une huile végétale et une matière grasse ; et de préférence dans laquelle le plastifiant liquide comprend un ou plusieurs parmi un plastifiant à base d'ester dicarboxylique, un plastifiant à base d'ester tricarboxylique et un ester d'acide acétique d'un monoglycéride, d'un trimellitate, d'un adipate, d'un benzoate, d'un polyester d'acide adipique, d'un polyétherester, d'un ester d'époxy ou d'un maléate.

13. Matériau de chaussée routière ou matériau de toiture comprenant la composition d'asphalte modifié par polymère selon la revendication 1.

14. Procédé de préparation de la composition d'asphalte modifié par polymère selon la revendication 1, ledit procédé comprenant les étapes consistant à :
(1) fournir le copolymère d'éthylène à fonction époxy E/X/Y/Z et éventuellement fournir en outre un polymère non réactif ;
(2) chauffer et mélanger le copolymère d'éthylène à fonction époxy E/X/Y/Z et le polymère non réactif facultatif avec un asphalte pour obtenir un mélange polymère-asphalte ; et éventuellement
(3) mélanger un coréactif avec le mélange d'asphalte polymère, dans lequel le coréactif comprend un ou plusieurs matériaux choisis dans le groupe constitué d'acide polyphosphorique, d'acide phosphoreux et d'anhydride trimellitique.

15. Procédé selon revendication 14, dans lequel l'étape (2) comprend le chauffage de l'asphalte entre 120 et 200 °C ; et l'ajout du copolymère d'éthylène à fonction époxy E/X/Y/Z et éventuellement le polymère non réactif à l'asphalte chauffé sous agitation pendant 10 à 30 minutes tout en maintenant la température du mélange polymère-asphalte entre 120 et 200 °C ; et dans lequel l'étape (3) comprend l'ajout du coréactif au mélange polymère-asphalte chauffé sous agitation pendant 10 minutes à 4 heures tout en maintenant la température du mélange polymère-asphalte entre 120 et 200 °C ; et, éventuellement, dans lequel le copolymère d'éthylène à fonction époxy E/X/Y/Z et le polymère non réactif facultatif sont dissous dans une huile de fluxage ou dans un plastifiant liquide avant d'être mélangés à l'asphalte.
